# EUROPEAN PATENT SPECIFICATION

(11) **EP 2 144 975 B1**
(45) Date of publication and mention of the grant of the patent: **27.10.2010**
(21) Application number: 08758588.1
(22) Date of filing: 16.05.2008
(51) Int. Cl.: C09K 19/42

(54) **LIQUID- CRYSTALLINE MEDIUM**
FLÜSSIGKRISTALLINES MEDIUM
MILIEU LIQUIDE CRISTALLIN

(30) Priority: 16.05.2007 EP 07009782; 01.10.2007 EP 07019245
(43) Date of publication of application: 20.01.2010
(73) Proprietor: Merck Patent GmbH, 64293 Darmstadt (DE)
(72) Inventor: KIM, Eun-Young, Gun-po-Shi Gunpo 435-762 (KR); LEE, Seung-Eun, Seoul (KR); SONG, Dong-Mee, Hwasung 445-737 (KR); CHO, Chul-Hee, Gunpo 435-726 (KR)
(86) International application number: PCT/EP2008/003962
(87) International publication number: WO 2008/138643

(56) References cited:
- EP-A- 0 949 232
- EP-A- 0 969 071
- WO-A-91/03450
- WO-A-2004/048500
- JP-A- 2005 298 733
- US-A1- 2004 245 500
- US-A1- 2007 228 330
- US-B2- 6 929 832

## Description

The invention relates to a liquid-crystalline medium based on a mixture of polar compounds having negative dielectric anisotropy (Δε), which contains at least one compound selected from the group of compounds of the formula I, IIA and IIB 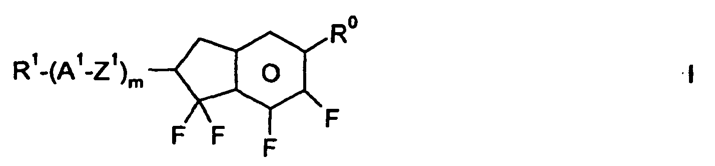 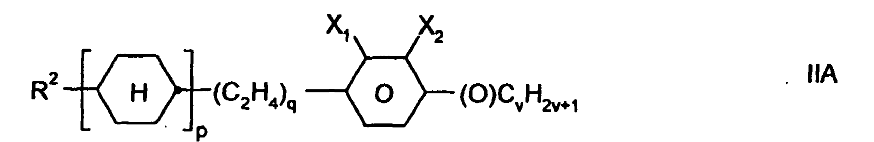 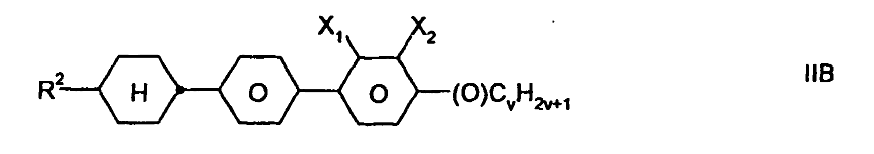 and at least one compound of the formula I* 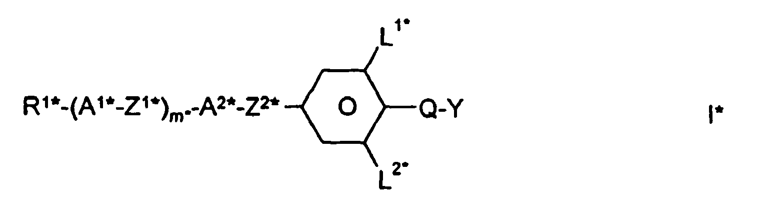 in which
- R⁰, R¹, R² and R^{1*}: each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 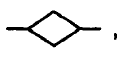 -C≡C-, -CF₂O-, -OCF₂- -OC-O- or -O-CO- in such a way that O atoms are not linked directly to one another,
- A¹, A^{1*}, A^{2*}: each, independently of each other
a) denote a 1,4-cyclohexenylene or 1,4-cyclohexylene radical, in which one or two non-adjacent CH₂ groups may be replaced by -O- or -S-,
b) denote a 1,4-phenylene radical, in which one or two CH groups may be replaced by N,
c) denote a radical from the group consisting of piperidine- 1,4-diyl-, 1,4-bicyclo[2.2.2]octylene-, naphthalene-2,6- diyl, decahydronaphthalene-2,6-diyl, 1,2,3,4-tetrahydro- naphthalene-2,6-diyl, phenanthrene-2,7-diyl and fluorene-2,7-diyl,
where the radicals a), b) and c) may be mono- or polysubstituted by halogen atoms,
- Z¹, Z^{1*} and Z^{2*}: each, independently of one another denote -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- or a single bond,
- m and m*: each independently of one another denote 0, 1 or 2
- p: denotes 1 or 2
- q: denotes 0 or 1
- v: denotes 1 to 6
- L^{1*} and L^{2*}: each independently of one another denote H or F
- X¹ and X²: each independently of one another denote, F, Cl, CHF₂, CF₃, OCHF₂ or OCF₃
- Q: single bond, -CF₂-, -CHF-, -OCF₂- or -OCHF- and
- Y: F or Cl.

Media of this type are to be used, in particular, for electro-optical displays with active-matrix addressing based on the ECB effect, for IPS (in plane switching) and for FFS (fringe field switching) displays.

The principle of electrically controlled birefringence, the ECB (electrically controlled birefringence) effect or DAP (deformation of aligned phases) effect was described for the first time in 1971 (M.F. Schieckel and K. Fahrenschon, "Deformation of nematic liquid crystals with vertical orientation in electrical fields", Appl. Phys. Lett. 19 (1971), 3912). Papers by J.F. Kahn (Appl. Phys. Lett. 20 (1972), 1193) and G. Labrunie and J. Robert (J. Appl. Phys. 44 (1973), 4869) followed.

The papers by J. Robert and F. Clerc (SID 80 Digest Techn. Papers (1980), 30), J. Duchene (Displays 7 (1986), 3) and H. Schad (SID 82 Digest Techn. Papers (1982), 244) have shown that liquid-crystalline phases must have high values for the ratio between the elastic constants K₃/K₁, high values for the optical anisotropy Δn and values for the dielectric anisotropy Δε of -0.5 to -5 in order to be suitable for use in high-information display elements based on the ECB effect. Electro-optical display elements based on the ECB effect have a homeotropic edge alignment. Dielectrically negative liquid-crystal media can also be used in displays which use the so-called IPS effect.

Industrial application of this effect in electro-optical display elements requires LC phases which have to satisfy a multiplicity of requirements. Particularly important here are chemical resistance to moisture, air and physical influences, such as heat, radiation in the infrared, visible and ultraviolet regions, and direct and alternating electric fields.

Furthermore, LC phases which can be used industrially are required to have a liquid-crystalline mesophase in a suitable temperature range and low viscosity.

None of the series of compounds having a liquid-crystalline mesophase that have been disclosed hitherto includes a single compound which meets all these requirements. Mixtures of two to 25, preferably three to 18, compounds are therefore generally prepared in order to obtain substances which can be used as LC phases. However, it has not been possible to prepare optimum phases easily in this manner, since no liquid-crystal materials having significantly negative dielectric anisotropy and adequate long-term stability have hitherto been available.

Matrix liquid-crystal displays (MLC displays) are known. Non-linear elements which can be used for individual switching of the individual pixels are, for example, active elements (i.e. transistors). The term "active matrix" is then used, where a distinction can be made between two types:
1. MOS (metal oxide semiconductor) transistors on a silicon wafer as substrate.
2. Thin-film transistors (TFTs) on a glass plate as substrate.

In type 1, the electro-optical effect used is usually dynamic scattering or the guest-host effect. The use of single-crystal silicon as substrate material restricts the display size, since even modular assembly of various part-displays results in problems at the joins.

In the case of the more promising type 2, which is preferred, the electro-optical effect used is usually the TN effect.

A distinction is made between two technologies: TFTs comprising compound semiconductors, such as, for example, CdSe, or TFTs based on polycrystalline or amorphous silicon. The latter technology is being worked on intensively worldwide.

The TFT matrix is applied to the inside of one glass plate of the display, while the other glass plate carries the transparent counterelectrode on its inside. Compared with the size of the pixel electrode, the TFT is very small and has virtually no adverse effect on the image. This technology can also be extended to fully colour-compatible displays, in which a mosaic of red, green and blue filters is arranged in such a way that a filter element is opposite each switchable pixel.

The TFT displays disclosed hitherto usually operate as TN cells with crossed polarisers in transmission and are back-lit.

The term MLC displays here covers any matrix display with integrated non-linear elements, i.e. besides the active matrix, also displays with passive elements, such as varistors or diodes (MIM = metal-insulator-metal).

MLC displays of this type are particularly suitable for TV applications (for example pocket TVs) or for high-information displays in automobile or aircraft construction. Besides problems regarding the angle dependence of the contrast and the response times, difficulties also arise in MLC displays due to insufficiently high specific resistance of the liquid-crystal mixtures [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, pp. 141 ff., Paris; STROMER, M., Proc. Eurodisplay 84, Sept. 1984: Design of Thin Film Transistors for Matrix Addressing of Television Liquid Crystal Displays, pp. 145 ff., Paris]. With decreasing resistance, the contrast of an MLC display deteriorates. Since the specific resistance of the liquid-crystal mixture generally drops over the life of an MLC display owing to interaction with the inside surfaces of the display, a high (initial) resistance is very important for displays that have to have acceptable resistance values over a long operating period.

The disadvantage of the MLC-TN displays disclosed hitherto is due to their comparatively low contrast, the relatively high viewing-angle dependence and the difficulty of producing grey shades in these displays.

There thus continues to be a great demand for MLC displays having very high specific resistance at the same time as a wide operating-temperature range, short response times and low threshold voltage with the aid of which various grey shades can be produced.

The invention has the object of providing MLC displays which are based on the ECB, IPS or FFS effect and do not have the disadvantages indicated above, or only do so to a lesser extent, and at the same time have very high specific resistance values.

It has now been found that this object can be achieved if nematic liquid-crystal mixtures which contain at least one compound of the formula I, IIA and/or IIB and at least one compound of the formula I* are used in these display elements. By adding small amounts of compounds of the formula I* having a positive Δε value to a host having a negative Δε value, the values for ε_{∥} and ε_{⊥} can be controlled which is important for the capacitance of LC mixtures, especially for VA mixtures.

The invention thus relates to a liquid-crystalline medium having negative dielectric anisotropy which contains at least one compound selected from the group of compounds of the formula I, IIA and IIB and at least one compound of the formula I*.

Mixtures for IPS and VA applications containing compounds of the formula I are known for example from WO 2004/048500. The components of the formulae I*, IIA and/or IIB are disclosed for example in WO91/03450, EP 0 364 538, EP 0 363 458 and DE 39 06 058.

LC mixtures having positive Δε for TN-TFT applications containing < 35 % compounds having negative Δε values are known from U.S. 6,929,832.

Further LC mixtures are known from EP 0 949 232 A1, US 2004/0245500 A1, EP 0 969 071 A1, and JP 2005 298733 (family of US 7,306,831 B1).

By the use of compounds of the formulae I, IIA and/or IIB having a negative dielectrically anisotropy (Δε) in combination with small amounts of compounds of the formula I* having a positive dielectrically anisotropy, the values for ε_{⊥} and ε_{∥} can be controlled, especially for LC mixtures for VA, PS-VA, IPS, PALC and FFS applications.

The mixtures according to the invention exhibit very favourable values for the capacitive threshold, relatively high values for the holding ratio and at the same time very good low-temperature stability as well as very low rotational viscosities.

Some preferred embodiments are indicated below:
a) Liquid-crystalline medium contains one or more, preferably 1, 2 or 3, compound(s) of the formulae I and one or more, preferably one, compound(s) of the formula I*.
In the compounds of the formula I R¹ is preferably alkyl; m is preferably 1; Z' is preferably a single bond. R⁰ is preferably H. A¹ is preferably a 1,4-cyclohexenylene or 1,4-cyclohexylene radical, in which one or two non-adjacent CH₂ groups may be replaced by -O-.
b) Liquid-crystalline medium contains one or more compounds of the formula IIA and/or IIB and one or more, preferably one, compound(s) of the formula I*.
In the compounds of the formula IIA and/or IIB X¹ is preferably F or Cl and X² is preferably F.
c) Liquid-crystalline medium which additionally contains one or more compounds of the formula III 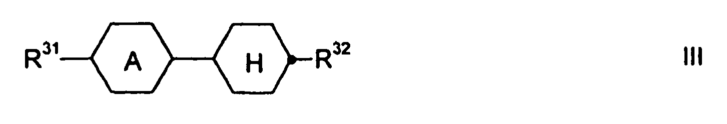 in which
- R³¹ and R³²: each, independently of one another, denote a straight- chain alkyl, alkylalkoxy, alkenyl, alkenyloxy or alkoxy radical having up to 12 C atoms, and 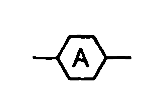
denotes 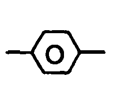 or 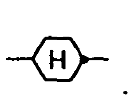
d) Liquid-crystalline medium contains one, two, three, four or more, preferably one, two or three compounds of the formula I.
e) Liquid-crystalline medium contains one compound of the formula I*.
f) Liquid-crystalline medium in which R¹ in the formula I preferably has the following meanings: straight-chain alkyl, vinyl, 1 E-alkenyl or 3-alkenyl.
If R¹ denotes alkenyl, it is preferably CH₂=CH, CH₃-CH=CH, C₃H, CH=CH, CH₂=CH-C₂H₄ or CH₃-CH=CH-C₂H₄.
R⁰ preferably denotes H or straight-chain alkyl having 1 to 6 C atoms, in particular methyl, ethyl or propyl. Especially R⁰ denotes H.
If A¹ and Z¹ in formula I are present twice, in the case that m=2, A¹ and Z¹ can have the same or different meanings.
g) Liquid-crystalline medium in which the proportion of compounds of the formula I in the mixture as a whole is at least 5% by weight, preferably at least 10 % by weight.
h) Liquid-crystalline medium in which the proportion of compounds of the formulae IIA and/or IIB in the mixture as a whole is at least 10 % by weight, preferably ≥ 20 % by weight.
i) Liquid-crystalline medium in which the proportion the compounds of the formula III in the mixture as a whole is at least 5 % by weight, preferably ≥ 10 % by weight.
j) Liquid-crystalline medium which contains at least one compound selected from the sub-formulae I1 to I18 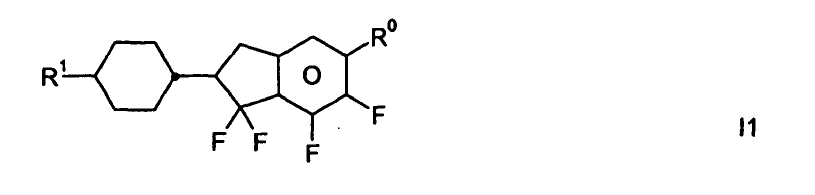 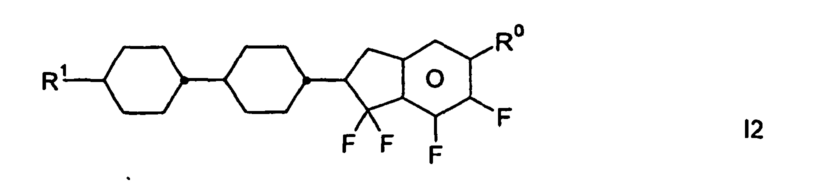 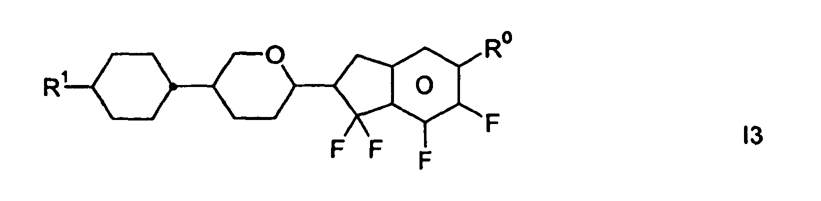 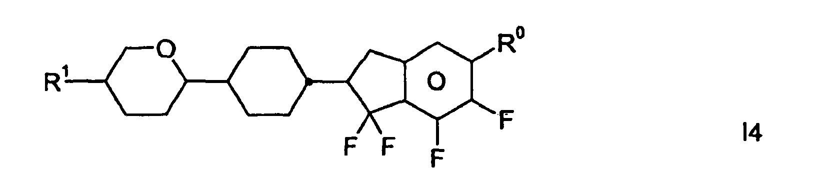 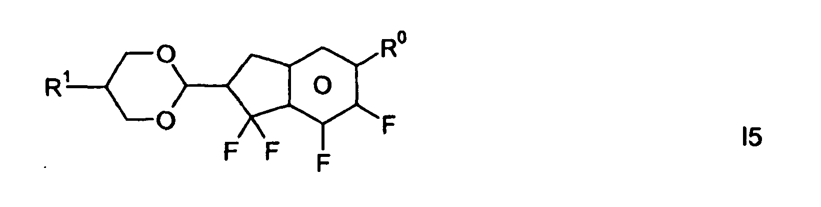 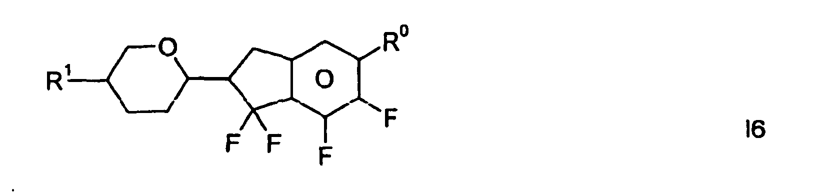 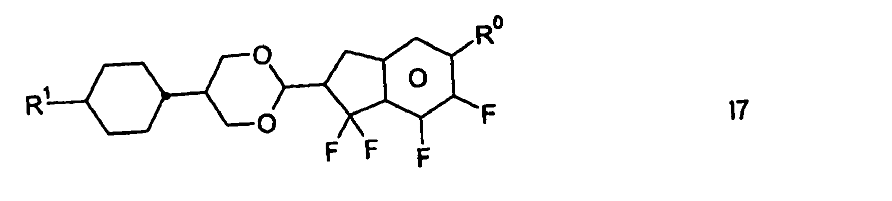 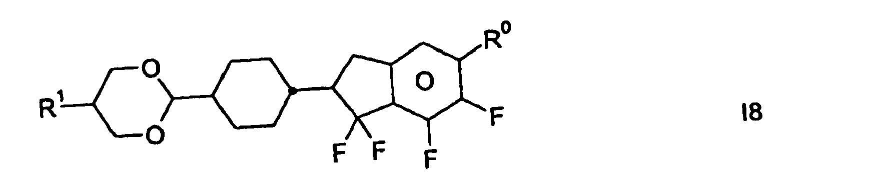 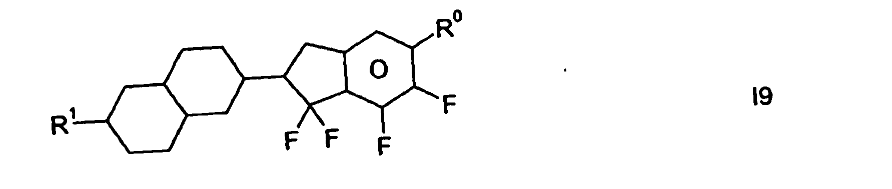 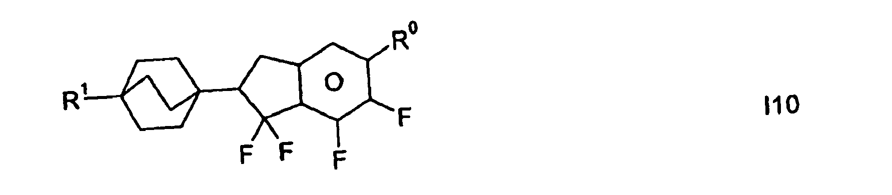 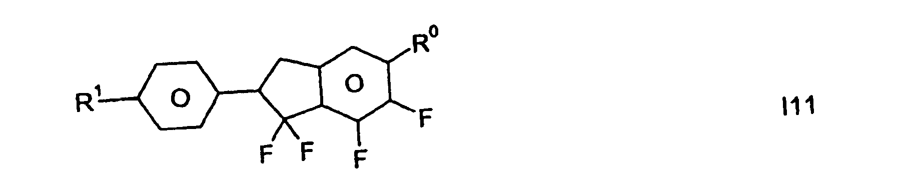 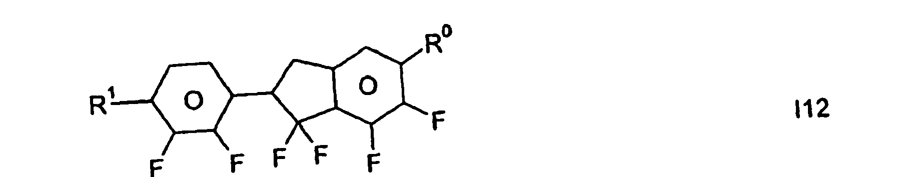 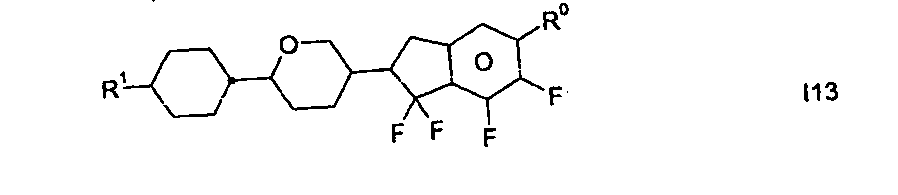 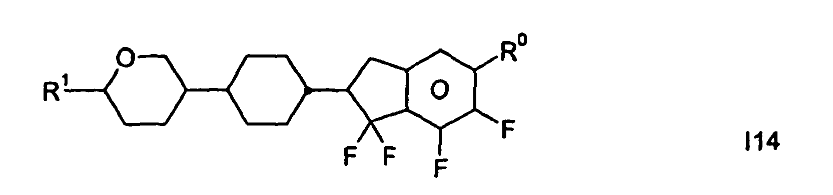 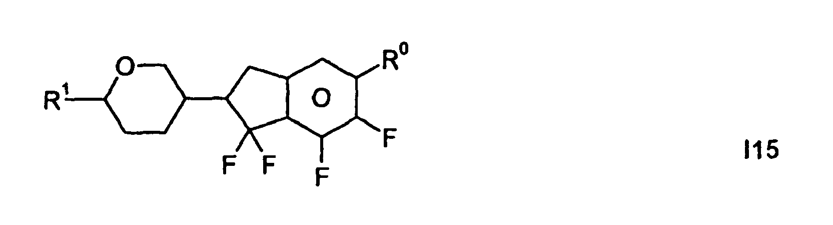 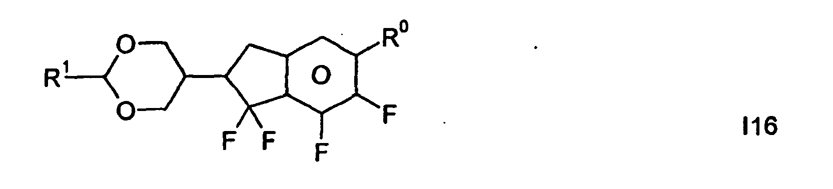 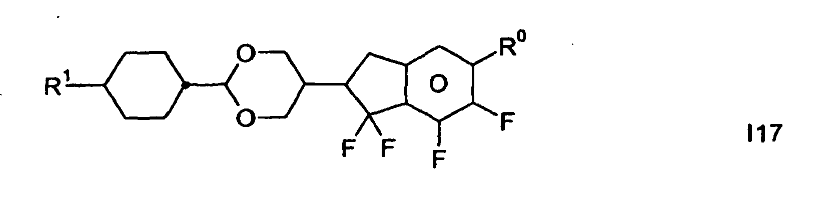 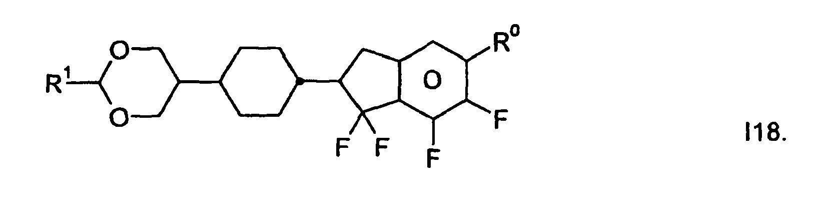
Particularly preferred media contain one or more compounds selected from the group consisting of the compounds of the formulae Ia to Ih 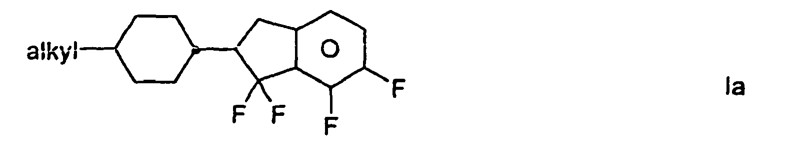 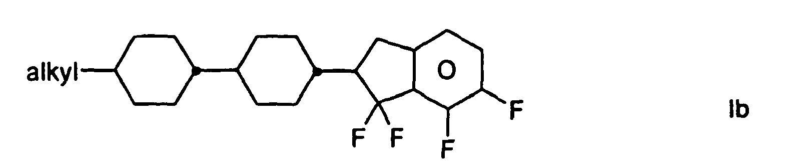 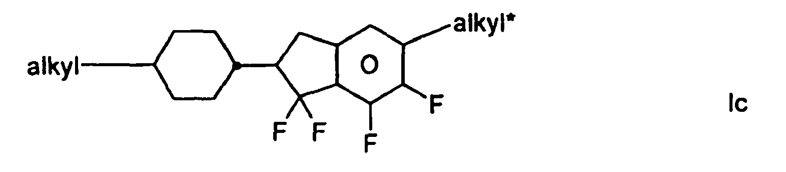 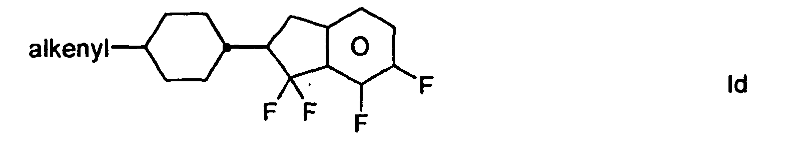 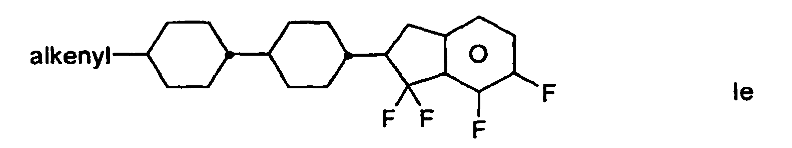 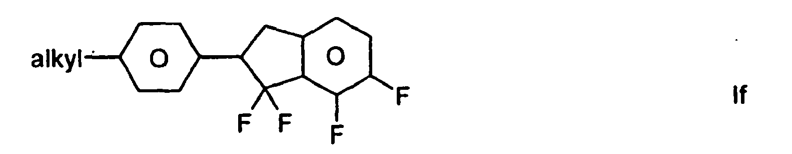 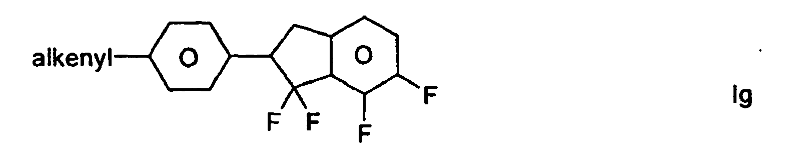 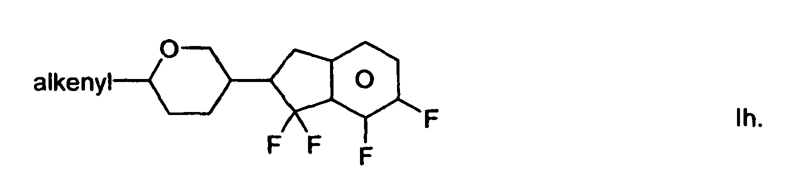
Particular preference is given to media which contain at least one compound of the formula Ia and/or lh. Especially preferred mixtures contain one, two or three compounds of the formula Ia.
k) Liquid-crystalline medium which contains at least one compound selected from the sub-formulae IIA-1 to IIA-24 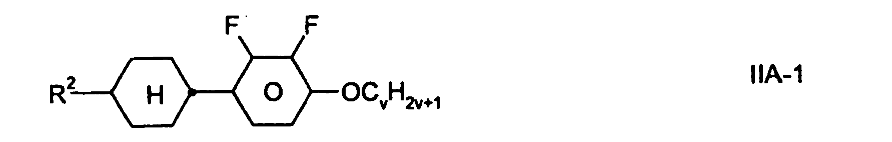 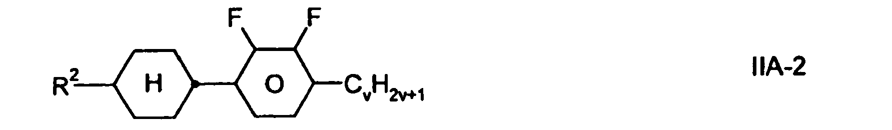 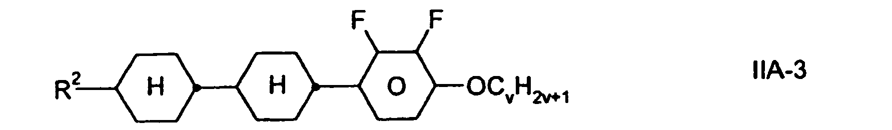 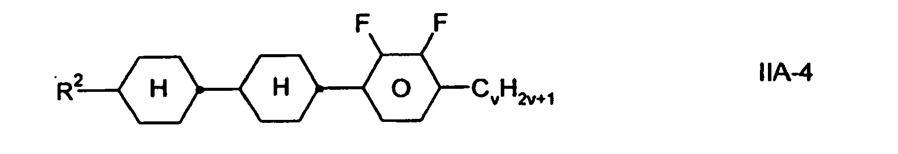 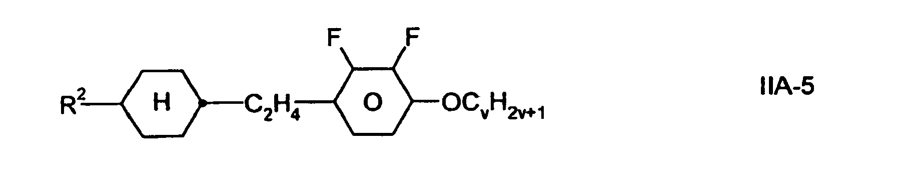 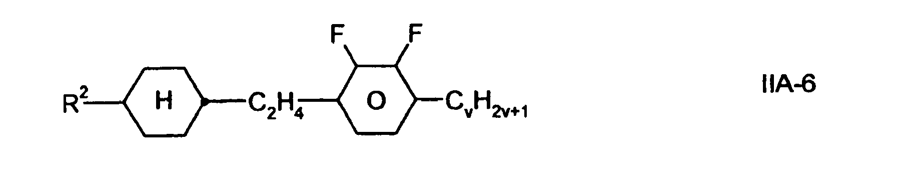 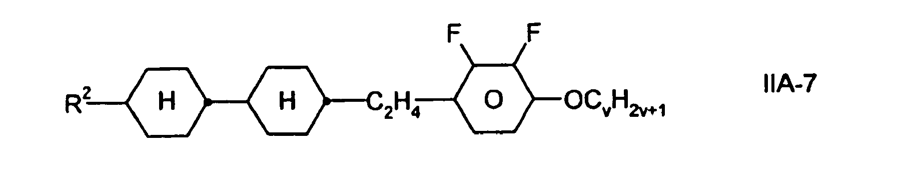 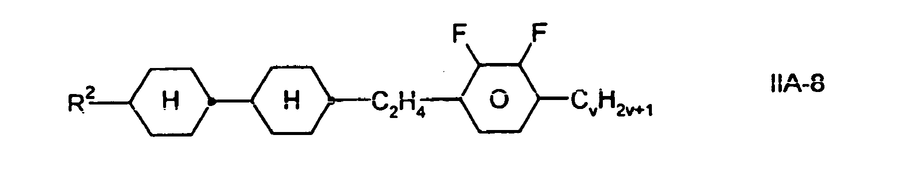 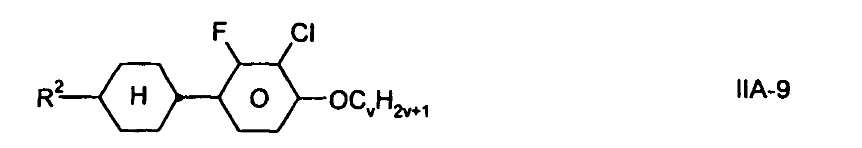 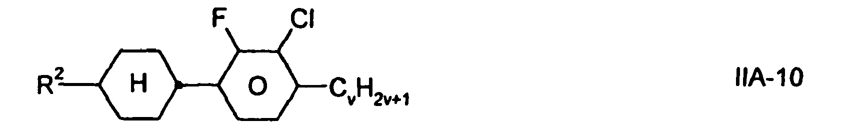 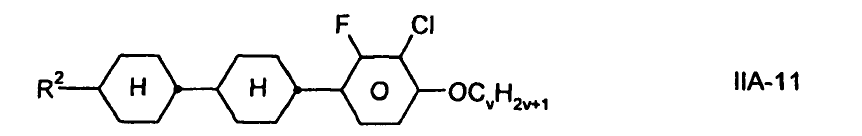 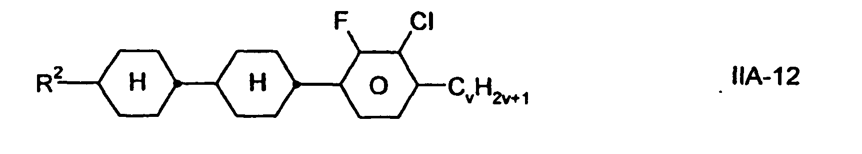 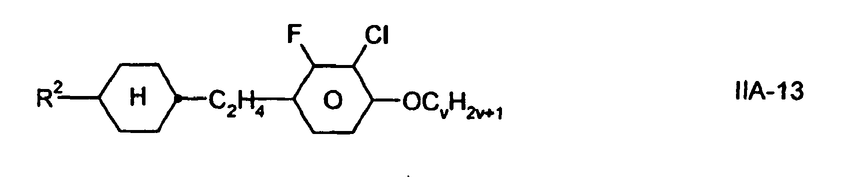 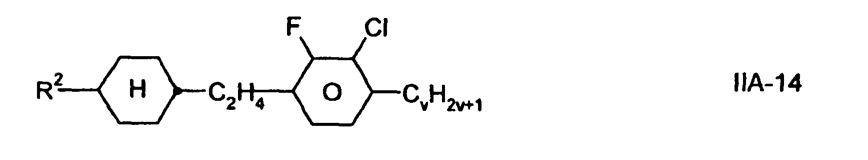 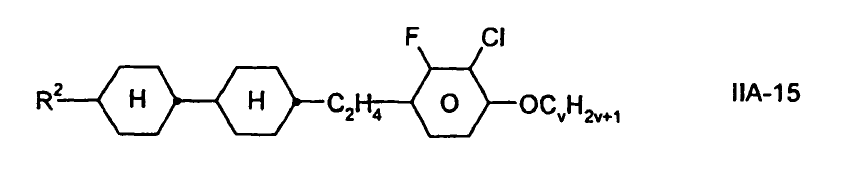 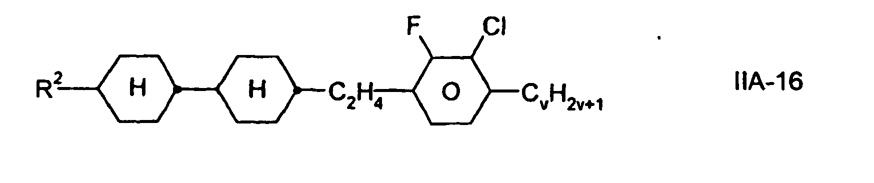 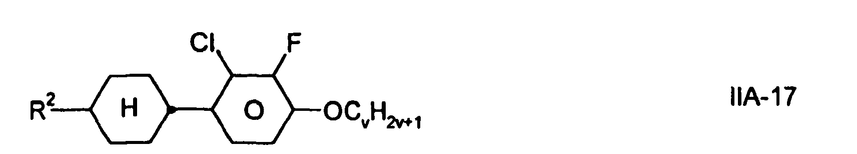 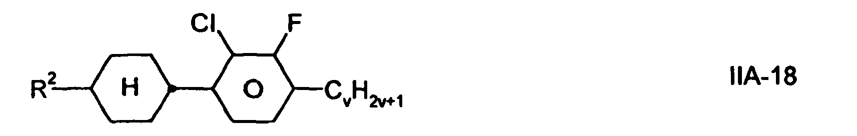 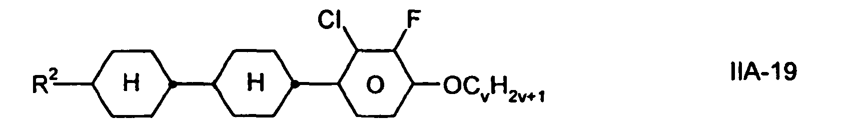 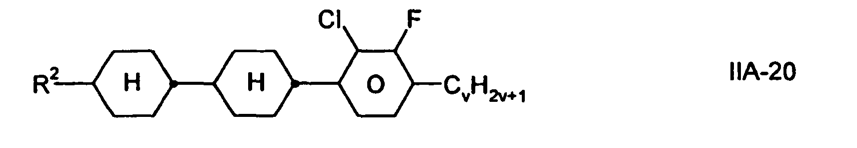 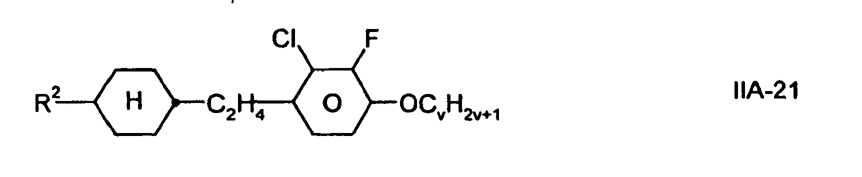 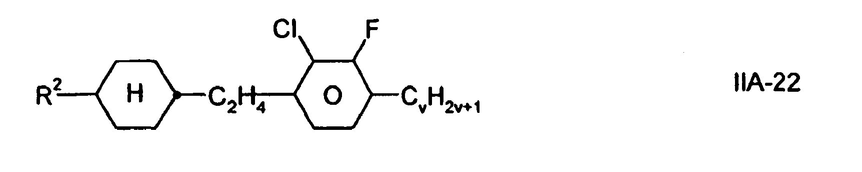 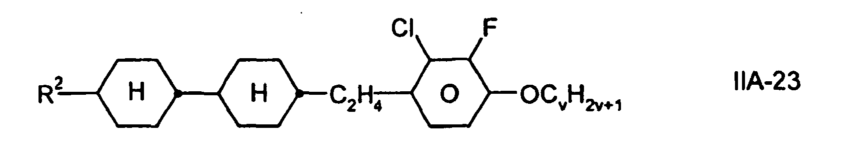 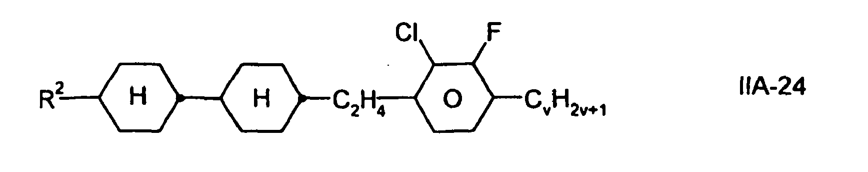 wherein R² has the meaning of R¹. Preferably R² is a straight-chained alkyl group having 1 to 6 carbon atoms or an alkenyl group having 2 to 6 carbon atoms, preferably vinyl, CH=CHCH₃, CH₂CH₂CH=CH₂,
CH₂CH₂CH=CHCH₃. Especially preferred are the compounds of the formulae IIA-1, IIA-2, IIA-3, IIA-4, IIA-5, IIA-6, IIA-17, IIA-19 and IIA-21.
In the compounds of the formula IIA X¹ and X² preferably are both F.
l) Liquid-crystalline medium which contains at least one compound selected from the sub-formulae IIB-1 to IIB-4 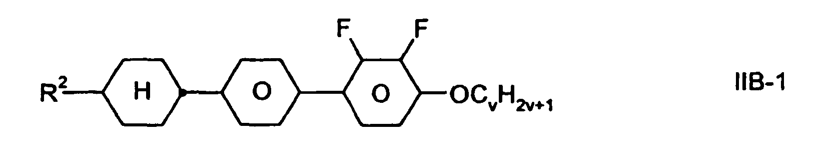 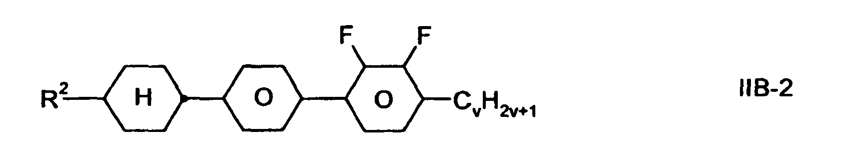 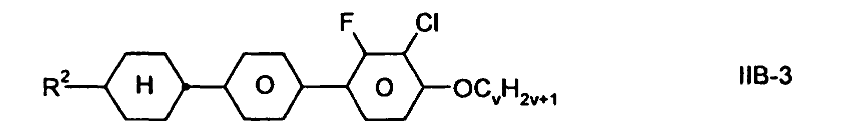 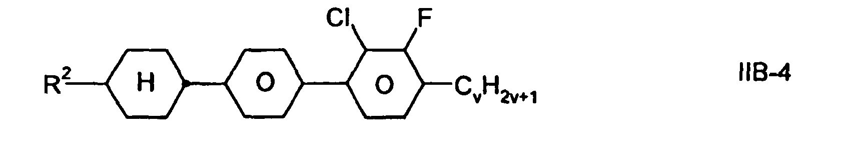 wherein R² has the meaning of R¹. Preferably R² is a straight-chained alkyl group having 1 to 6 carbon atoms or an alkenyl group having 2 to 6 carbon atoms, preferably vinyl, CH=CHCH₃, CH₂CH₂CH=CH₂, CH₂CH₂CH=CHCH₃. Especially preferred is the compound of the formula IIB-1.
In the compounds of the formula IIB X¹ and X² preferably are both F.
m) Liquid-crystalline medium which additionally contains a compound selected from the formulae IIIa to IIIf 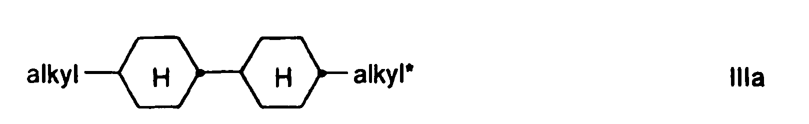 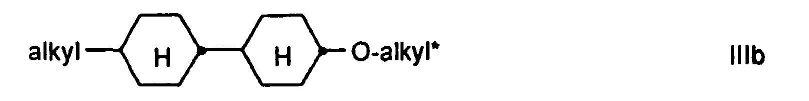 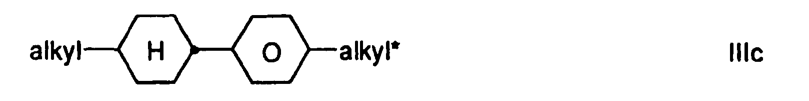 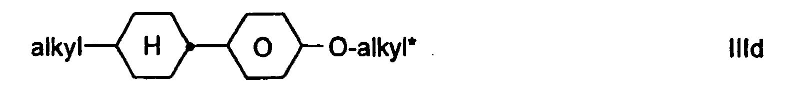 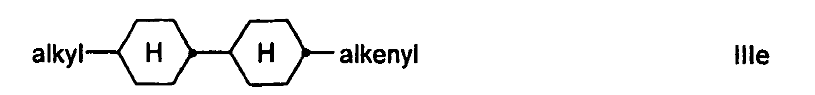 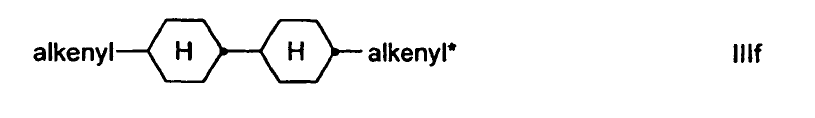 in which
- alkyl and alkyl*: each, independently of one another, denote a straight- chain alkyl radical having 1-6 C atoms, and
- alkenyl and alkenyl*: each, independently of one another, denote a straight- chain alkenyl radical having 2-6 C atoms.
The medium according to the invention preferably contains at least one compound of the formula IIIa, formula IIIb and/or formula IIIe.
Particularly preferred compounds of the formulae IIIe and IIIf are indicated below: 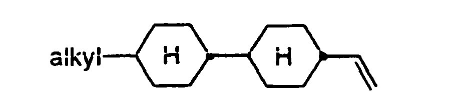 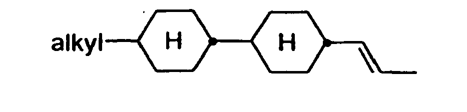 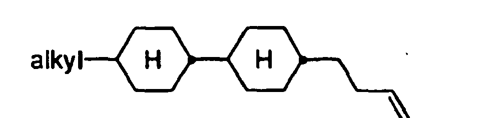 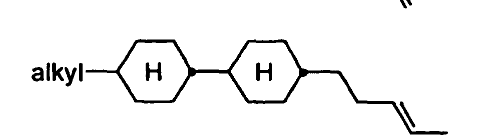 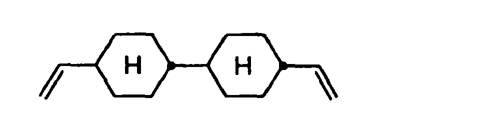 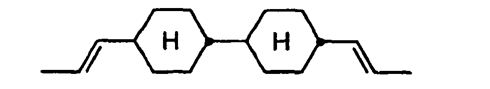 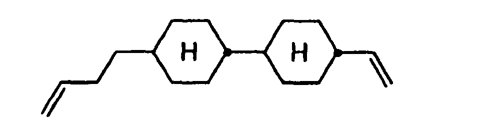 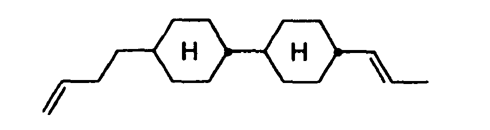 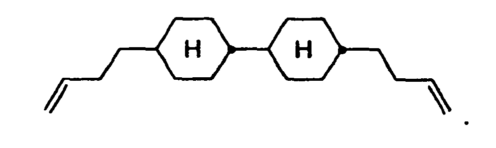
n) Liquid-crystalline medium which contains

| | |
|---|---|
| 5-30 % by weight | of one or more compounds of the formulae I and one or more compounds of the formula I* |
| or | |
| 20-70 % by weight | of one or more compounds selected from the formulae IIA and/or IIB and one or more compounds of the formula I* |
| or | |
| 10-100 % by weight | of one or more compounds of the formulae I, one or more compounds selected from the formulae IIA and/or IIB and one or more compounds of the formula I* |

based on the total mixture.
o) Liquid-crystalline medium which additionally contains one or more tetracyclic compounds of the formulae 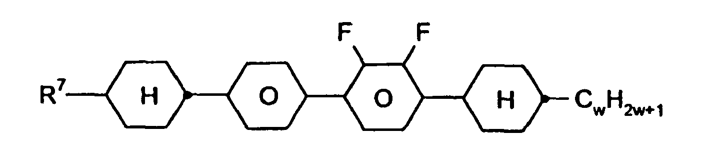 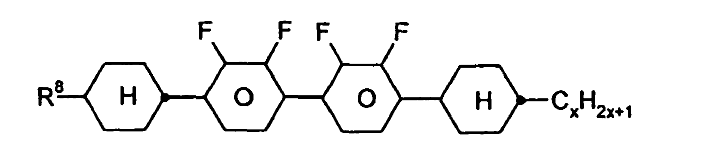 in which
- R⁷ and R⁸: each, independently of one another, have one of the meaning indicated for R¹ in Claim 1, and
- w and x: each, independently of one another, denote 1 to 6.

p) Liquid-crystalline medium which additionally contains one or more compounds of the formulae V-1 to V-17 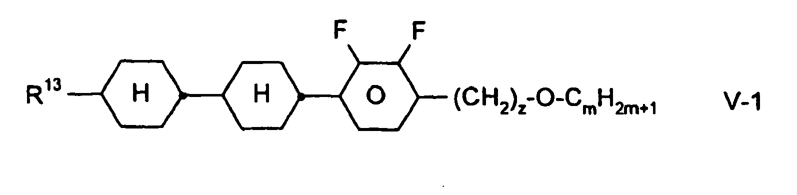 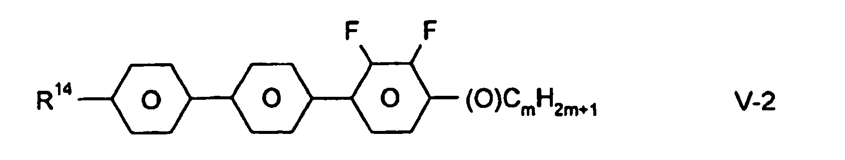 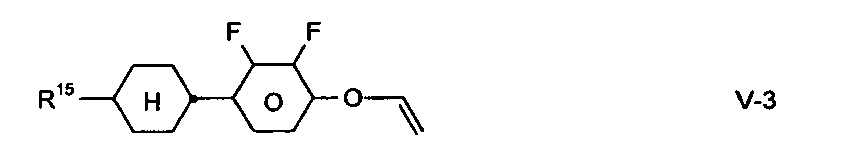 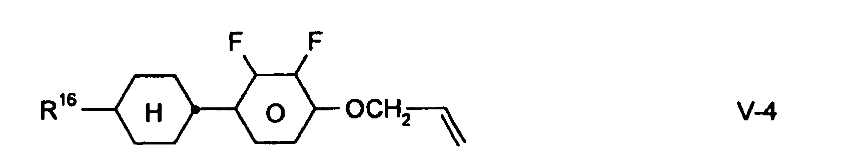 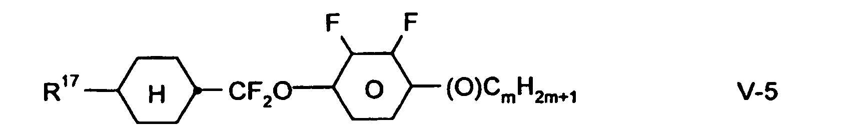 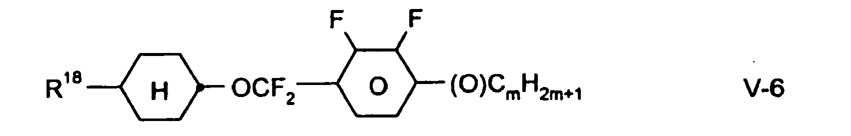 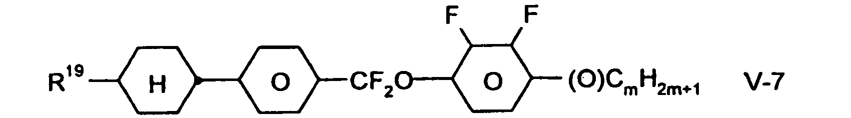 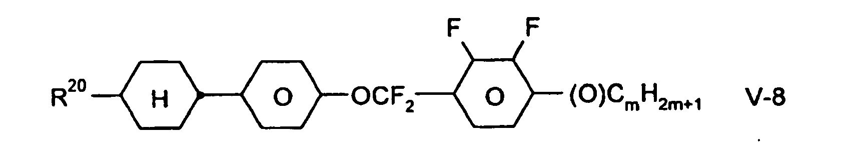 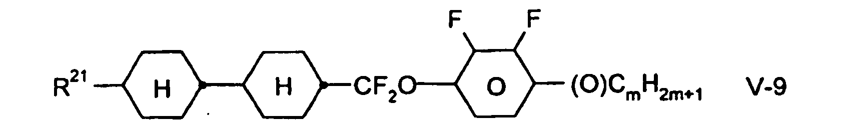 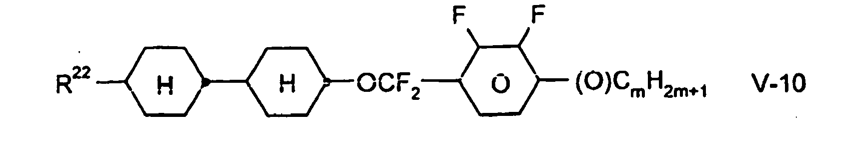 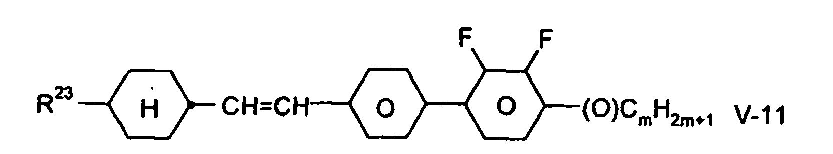 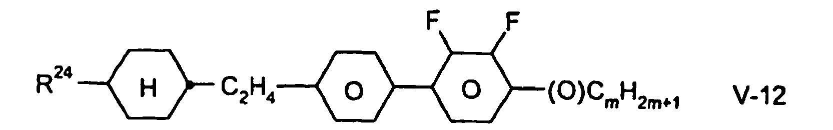 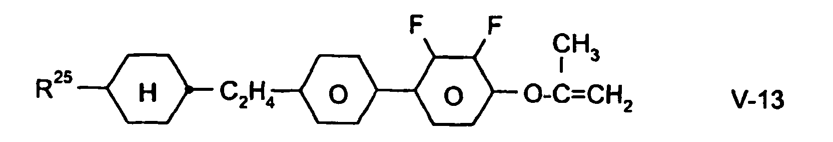 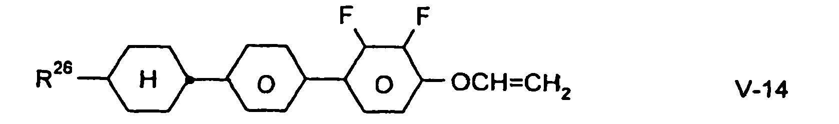 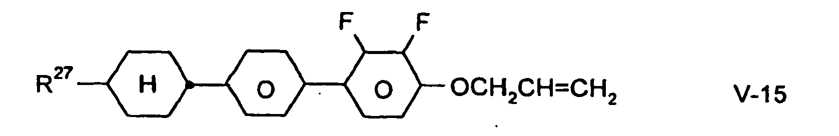 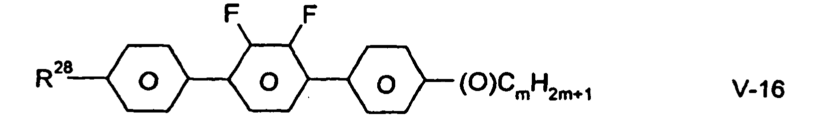 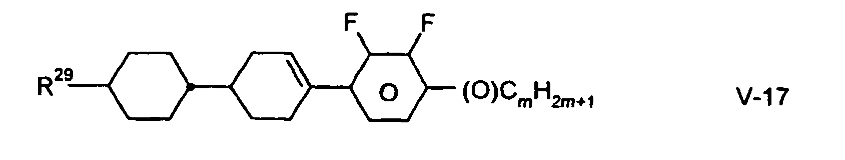 in which R¹³-R²⁹ each, independently of one another, have the meanings indicated for R¹, and z and m each, independently of one another, denote 1-6. R^{E} denotes H, CH₃, C₂H₅ or n-C₃H₇.
Preferred mixtures contain at least one compound of the formulae V-16 and/or V-17.
q) Liquid-crystalline medium additionally contains one or more compounds of the formulae T-1 to T-3 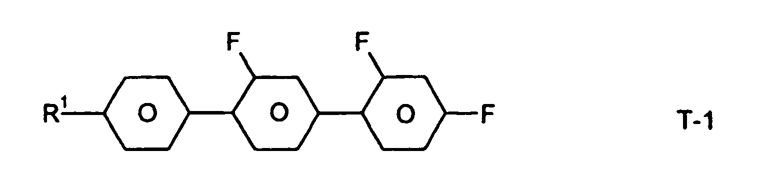 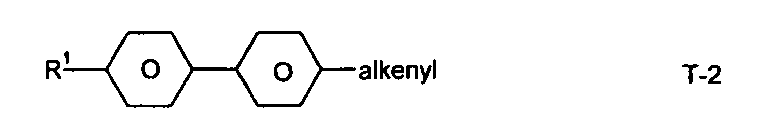 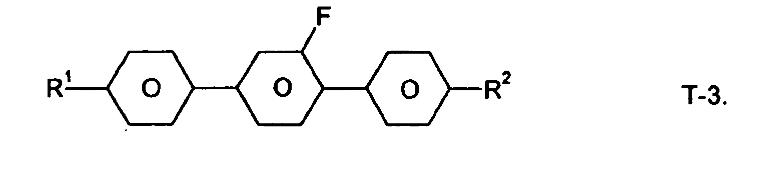 R¹ and R² have the meanings given in Claim 1, preferably alkyl or alkenyl and alkenyl has the meaning indicated above.
Especially preferred are compounds of the formula T-3. Preferred compounds of the formula T-3 are the compounds of the formulae T-3a and T-3b 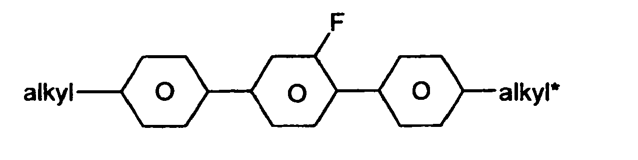 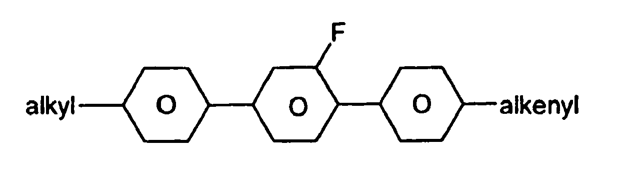 wherein alkyl, alkyl* and alkenyl have the meanings given above.
r) Liquid-crystalline medium which contains at least one compound selected from the sub-formulae I*-1 to I*-11, 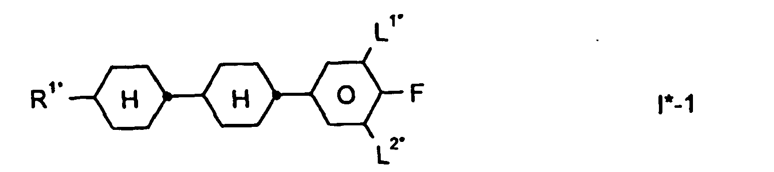 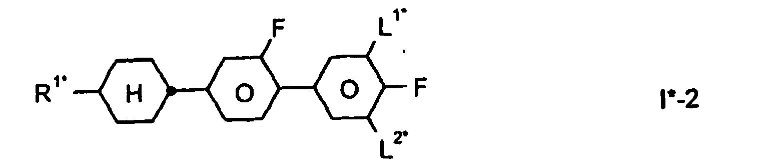 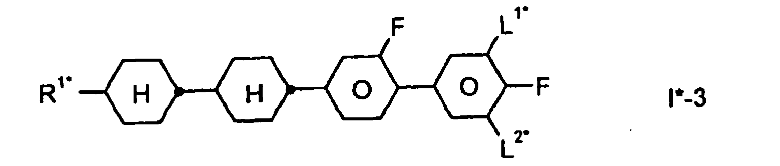 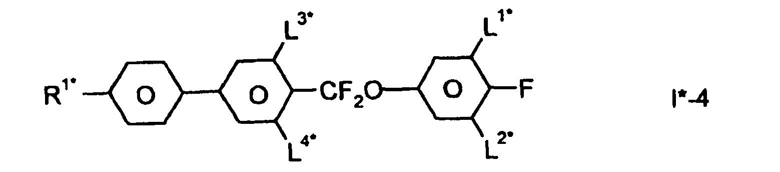 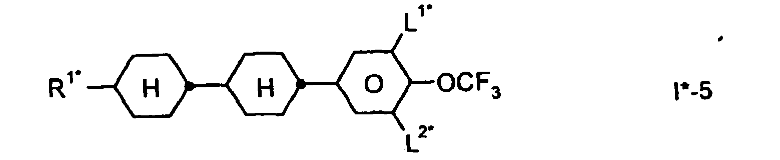 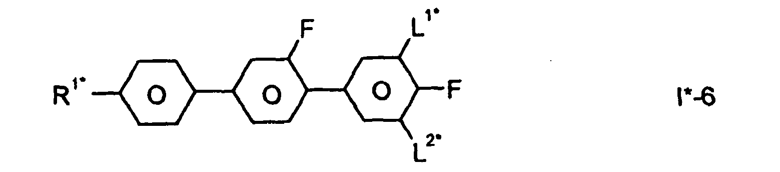 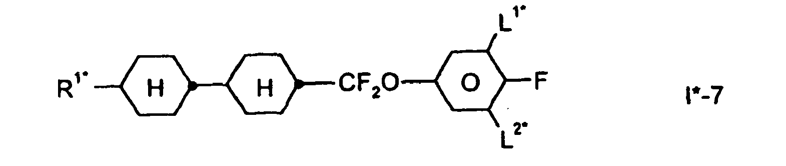 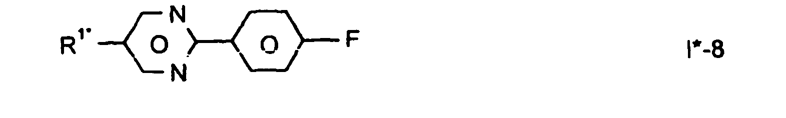 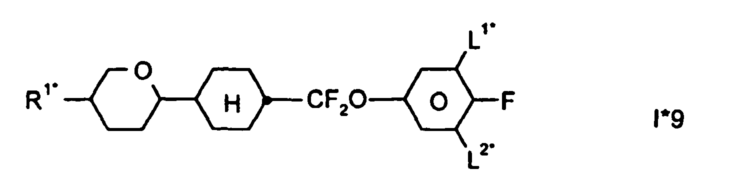 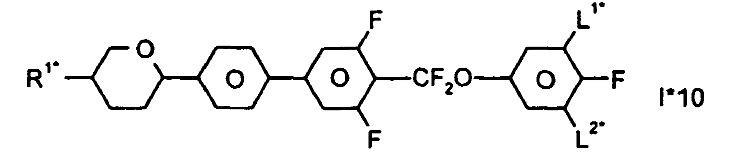 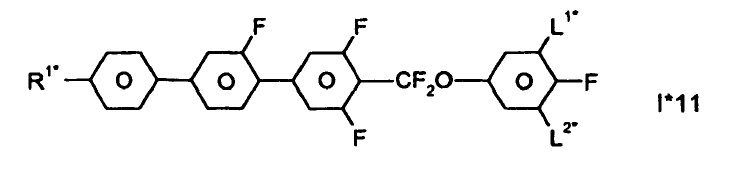 in which R^{1*}, L^{1*} and L^{2*} have the meanings indicated above.
L^{3*} and L^{4*} each independently denote H or F.
Particularly preferred media contain one or more compounds selected from the compounds of the formula I* wherein L^{1*} and L²* are both F.
Especially preferred are compounds of the formulae I*-1a, I*-1b, I*-2a, I*-3a, I*-4a, I*-5a, I*-6a, I*-7a, I*-7b, I*-8a, I*-9a, I*-10a, I*-11a 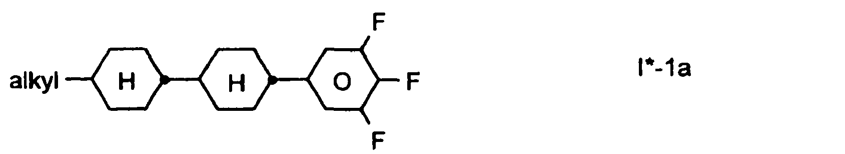 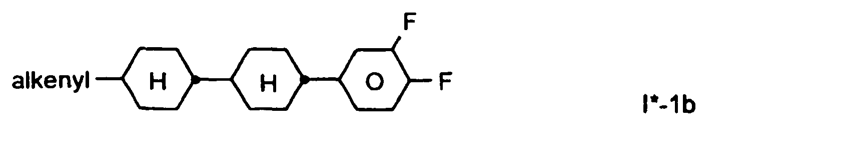 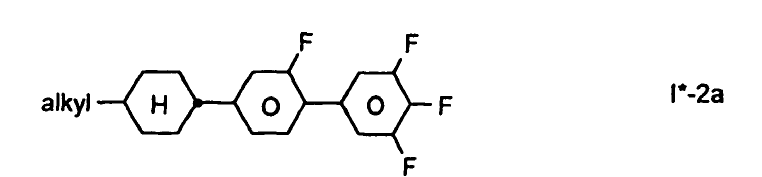 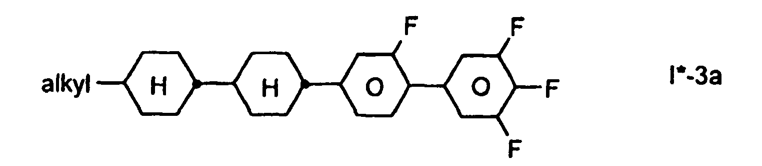 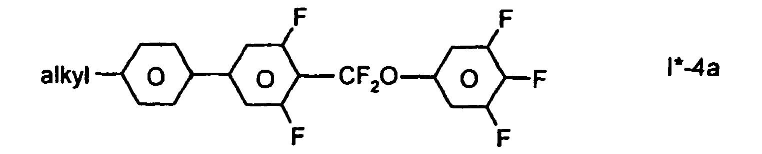 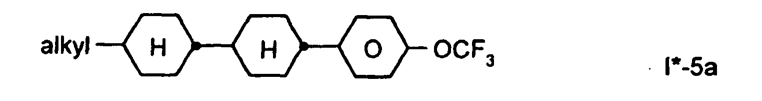 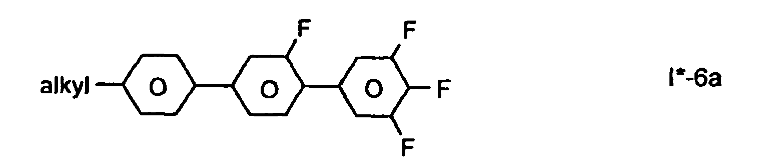 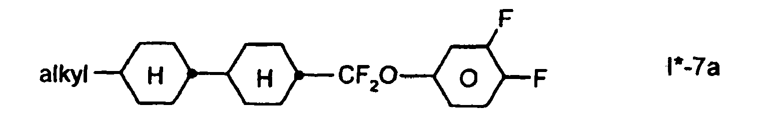 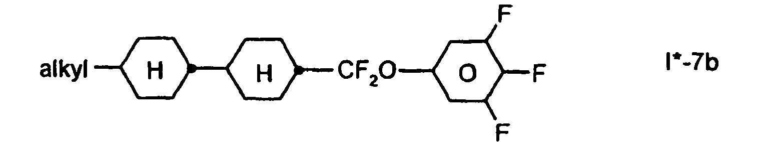 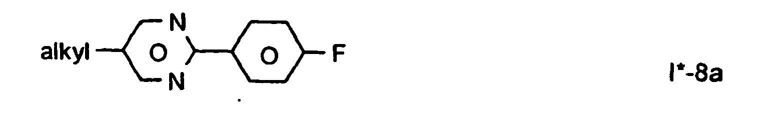 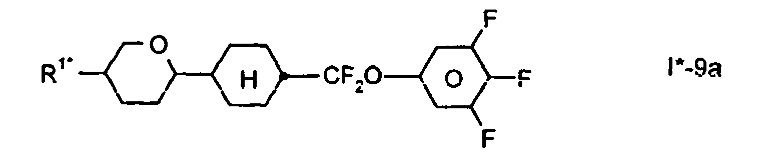 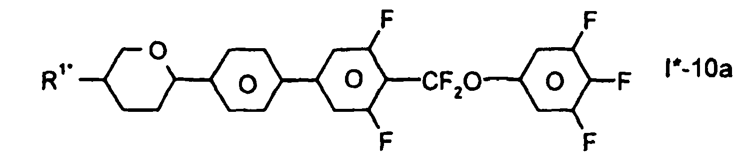 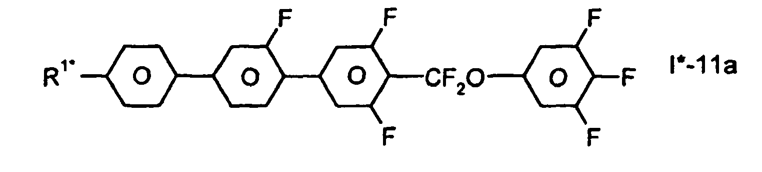 wherein
alkyl and alkenyl have the meanings as given above.
Preferred mixtures contain ≤ 10 %, especially ≤ 5 %, most preferred ≤ 3 % by weight of the compounds of the formula I*.

Especially preferred embodiments are given in the following:
- The mixture according to the invention contains one compound of the formula I and one compound of the formula I*-1a.
- The mixture according to the invention contains two or three compounds of the formula I and one compound of the formula I*-1a.
- The mixture according to the invention contains a compound of the formula IIB in combination with a compound of the formula I*-1a and/or I*-1b.
- The mixture according to the invention contains at least one compound of the formula I, IIA and IIB in combination with at least one compound of the formula I*-4a, and/or I*-7b and/or I*-9a and/or I*-10a and/or I*-11a.
- The mixture according to the invention contains at least one compound of the formula IIB in combination with at least one compound of the formula I*-2a and/or I*-3a and/or I*-5a and/or I*-6a.

The invention furthermore relates to an electro-optical display with active-matrix addressing based on the ECB effect, characterised in that it contains, as dielectric, a liquid-crystalline medium according to one of Claims 1 to 16.

The liquid-crystal mixture preferably has a nematic phase range of at least 60 K and a flow viscosity ν₂₀ of at most 30 mm² · s⁻¹ at 20°C.

The liquid-crystal mixture according to the invention has a Δε of -0.5 to -8.0, preferably -2.0 to -7.0, in particular -3.0 to -6.0, where Δε denotes the dielectric anisotropy. The rotational viscosity γ₁ is preferably < 150 mPa·s, in particular < 140 mPa·s.

The birefringence Δn in the liquid-crystal mixture is generally between 0.07 and 0.16, preferably between 0.08 and 0.11.

The mixtures according to the invention are suitable for all VA-TFT applications, such as, for example, MVA, PVA and ASV. They are furthermore suitable for PS-VA (Polymer stabilized VA), IPS, FFS and PALC applications with negative Δε.

The individual components of the formulae I, I*, IIA, IIB and III of the liquid-crystal phases according to the invention are either known or their methods of preparation can easily be derived from the prior art by the person skilled in the relevant art since they are based on standard methods described in the literature.

The nematic liquid-crystal mixtures in the displays according to the invention generally comprise two components A and B, which themselves consist of one or more individual compounds.

Component A has significantly negative dielectric anisotropy and gives the nematic phase a dielectric anisotropy of ≤ -0.3. It preferably comprises compounds of the formulae I, IIA and/or IIB.

The proportion of component A is preferably between 45 and 100 %, in particular between 60 and 100 %.

For component A, one (or more) individual compound(s) which has (have) a value of Δε of s -0.8 is (are) preferably selected. This value must be more negative the smaller the proportion A in the mixture as a whole.

Component B has pronounced nematogeneity and a flow viscosity of not greater than 30 mm² · s⁻¹, preferably not greater than 25 mm² · s⁻¹, at 20°C.

Particularly preferred individual compounds in component B are extremely low-viscosity nematic liquid crystals having a flow viscosity of not greater than 18 mm² · s⁻¹, preferably not greater than 12 mm² · s⁻¹, at 20°C.

Component B is monotropically or enantiotropically nematic, has in most cases no smectic phases and is able to prevent the occurrence of smectic phases down to very low temperatures in liquid-crystal mixtures. Some compounds of Component B have smectic phases but their solubility are usually good. For example, if various materials of high nematogeneity are added to a smectic liquid-crystal mixture, the nematogeneity of these materials can be compared through the degree of suppression of smectic phases that is achieved.

A multiplicity of suitable materials is known to the person skilled in the art from the literature. Preference is given to the compounds of the formula III, formula V and/or formula VI 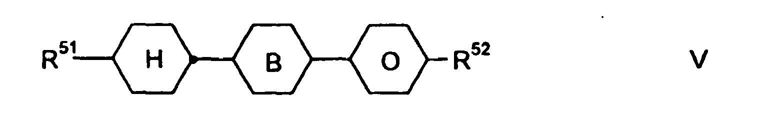 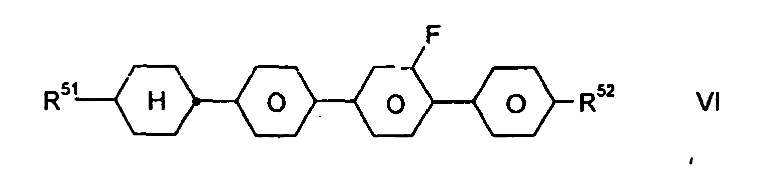 in which
- R⁵¹ and R⁵²: each, independently of one another, have the meanings given for R³¹ and R³², and 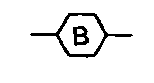 denotes

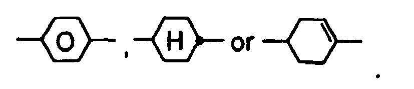

Particular preference is given to compounds of the formula III. Preferred compounds of the formulae V and VI are given in the following table for example CCP-V-m, CCP-Vn-m, CCP-nOm, CCP-nm, BCH-nm.

In addition, these liquid-crystal phases may also comprise more than 18 components, preferably 18 to 25 components.

The phases preferably comprise 4 to 15, in particular 5 to 12, compounds of the formulae I, IIA and/or IIB and optionally compounds of the formulae III-VI, preferably compounds of the formula III and V.

Besides compounds of the formulae I, I*, IIA and/or IIB and III, other constituents may also be present, for example in an amount of up to 45% of the mixture as a whole, but preferably up to 35 %, in particular up to 10 %.

The other constituents are preferably selected from nematic or nematogenic substances, in particular known substances, from the classes of the azoxybenzenes, benzylideneanilines, biphenyls, terphenyls, phenyl or cyclohexyl benzoates, phenyl or cyclohexyl cyclohexanecarboxylates, phenylcyclohexanes, cyclohexylbiphenyls, cyclohexylcyclohexanes, cyclohexylnaphthalenes, 1,4-biscyclohexylbiphenyls or cyclohexylpyrimidines, phenyl- or cyclohexyldioxanes, optionally halogenated stilbenes, benzyl phenyl ethers, tolans and substituted cinnamic acids.

The most important compounds which are suitable as constituents of liquid-crystal phases of this type can be characterised by the formula IV

R⁹-L-G-E-R¹⁰ IV

in which L and E each denote a carbocyclic or heterocyclic ring system from the group formed by 1,4-disubstituted benzene and cyclohexane rings, 4,4'-disubstituted biphenyl, phenylcyclohexane and cyclohexylcyclohexane systems, 2,5- disubstituted pyrimidine and 1,3-dioxane rings, 2,6-disubstituted naphthalene, di- and tetrahydronaphthalene, quinazoline and tetrahydroquinazoline,
G is

| | |
|---|---|
| -CH=CH- | -N(O)=N- |
| -CH-CQ- | -CH=N(O)- |
| -C≡C- | -CH₂-CH₂- |
| -CO-O- | -CH₂-O- |
| -CO-S- | -CH₂-S- |
| -CH=N- | -COO-Phe-COO- |
| -CF₂O- | -CF=CF- |
| -OCF₂ | -OCH₂- |
| -(CH₂)₄- | -(CH₂)₃O- |

or a C-C single bond, Q denotes halogen, preferably chlorine, or -CN, and R⁹ and R¹⁰ each denote alkyl, alkenyl, alkoxy, alkanoyloxy or alkoxycarbonyloxy having up to 18, preferably up to 8 carbon atoms, or one of these radicals alternatively denotes CN, NC, NO₂, NCS, CF₃, OCF₃, F, Cl or Br.

In most of these compounds, R⁹ and R¹⁰ are different from one another, one of these radicals usually being an alkyl or alkoxy group. Other variants of the proposed substituents are common. Many such substances or also mixtures thereof are also commercially available. All these substances can be prepared by methods known from the literature.

It goes without saying for the person skilled in the art that the VA, PS-VA, IPS, FFS or PALC mixture according to the invention may also comprise compounds in which, for example, H, N, O, Cl and F have been replaced by the corresponding isotopes.

The construction of the liquid-crystal displays according to the invention corresponds to the usual geometry, as described, for example, in EP-A 0 240 379.

The following examples are intended to explain the invention without limiting it. Above and below, percentages are per cent by weight; all temperatures are indicated in degrees Celsius.

Besides the compounds of the formulae I, IIA, IIB and I*, the mixtures according to the invention preferably comprise one or more of the compounds shown below.

The following abbreviations are used:
(n and m = 1-6; z = 1-6; (O)CₘH₂ₘ₊₁ denotes OCmH2m+1 or OCₘH₂ₘ₊₁)

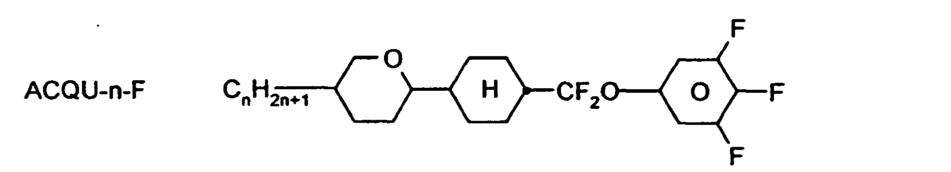

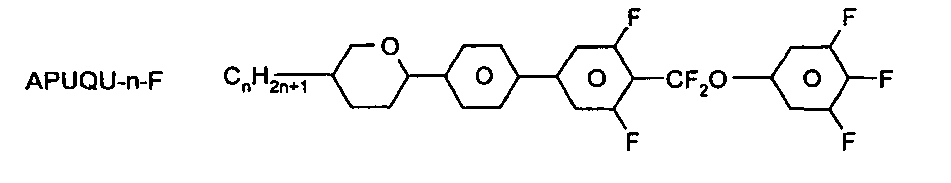

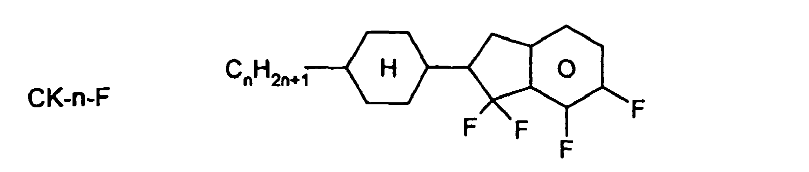

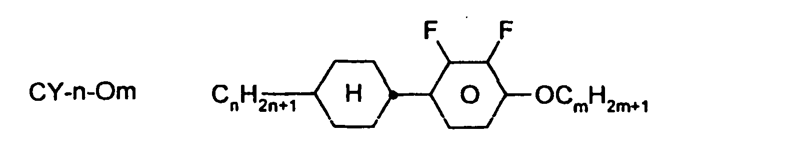

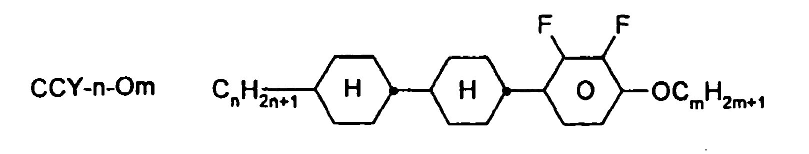

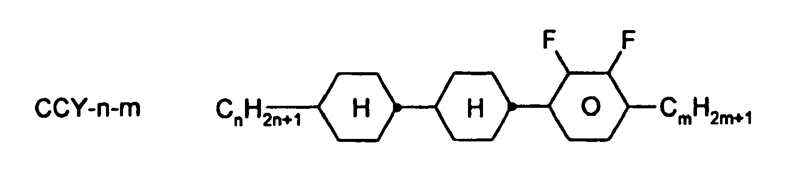

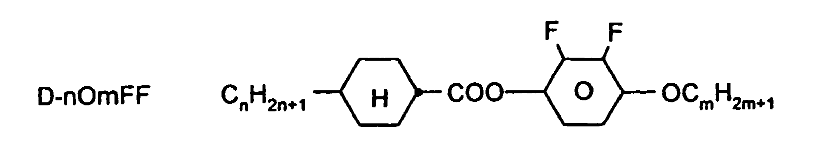

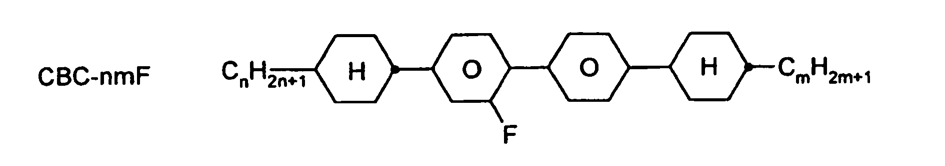

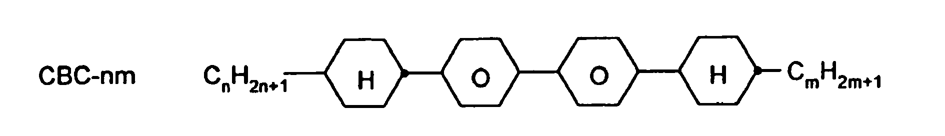

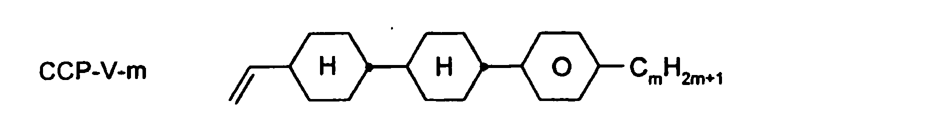

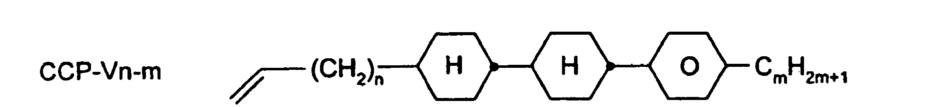

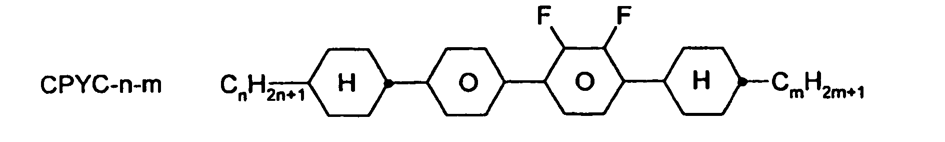

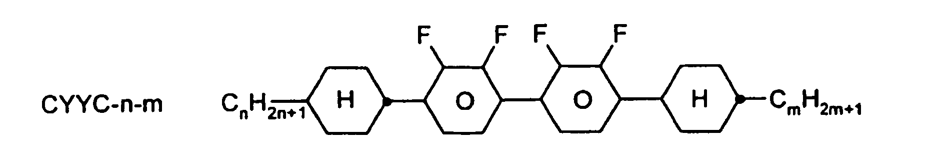

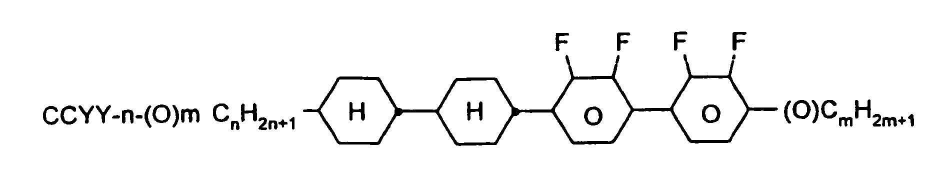

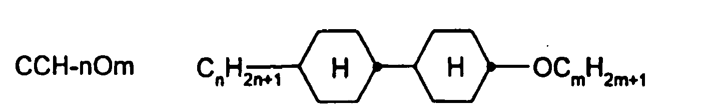

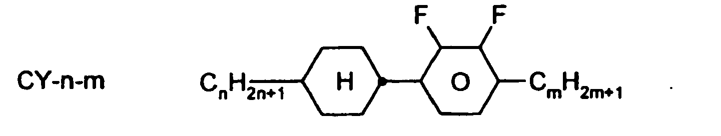

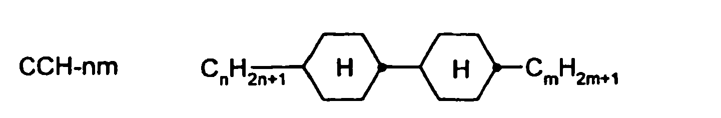

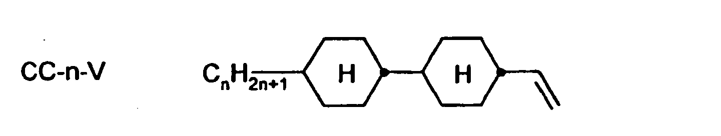

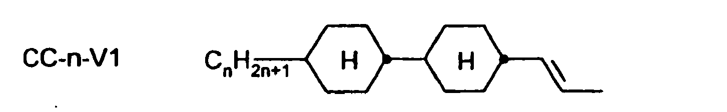

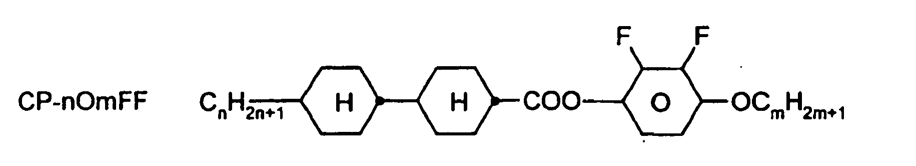

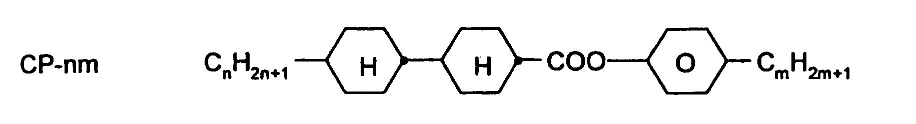

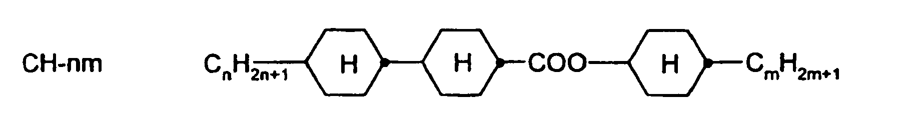

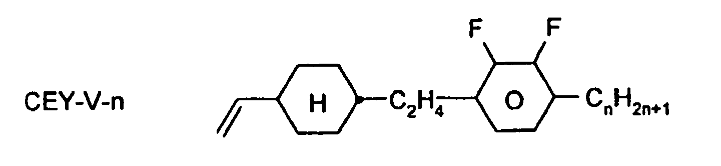

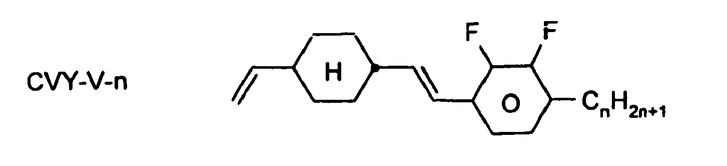

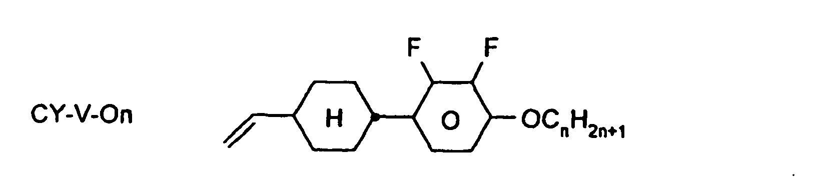

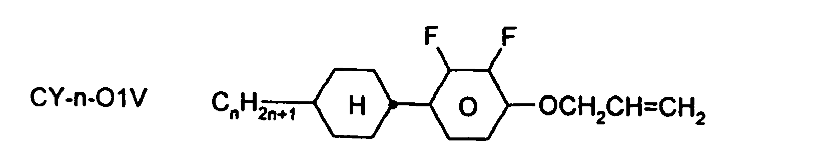

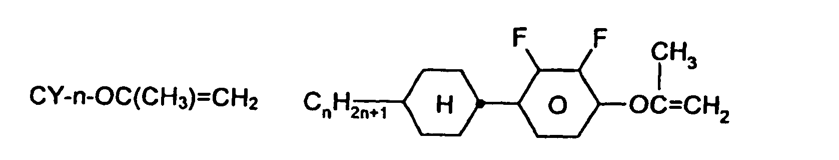

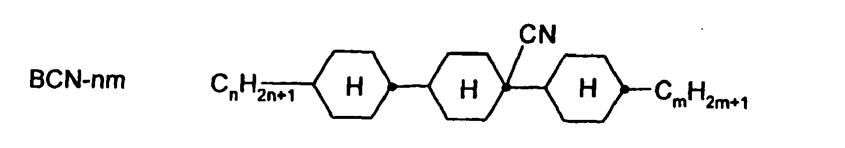

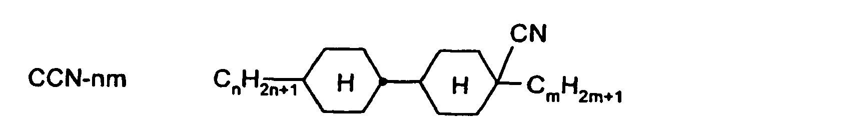

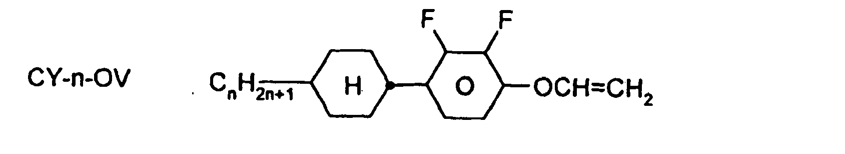

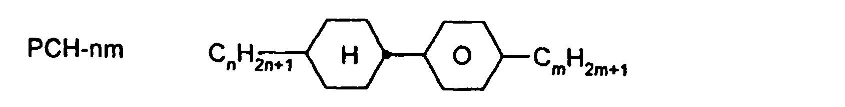

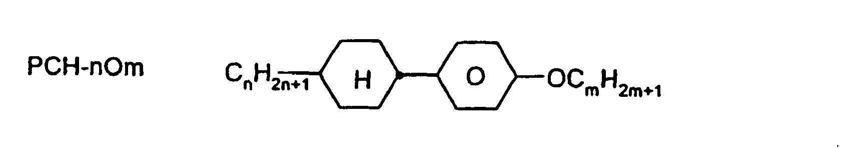

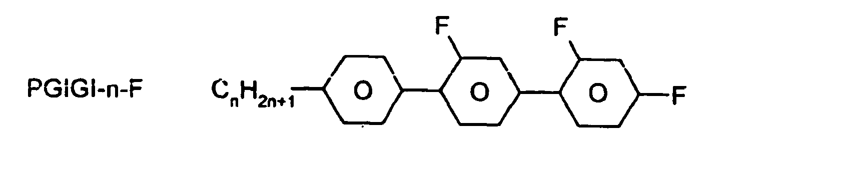

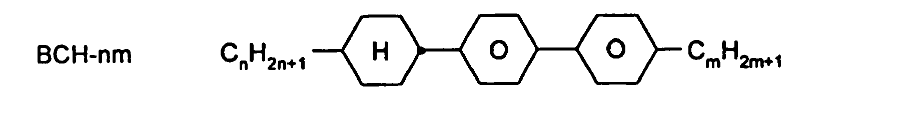

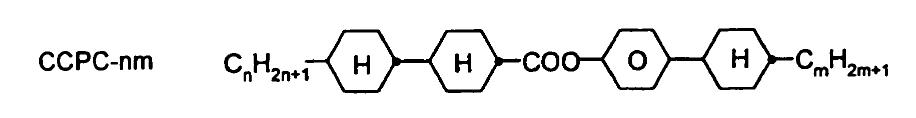

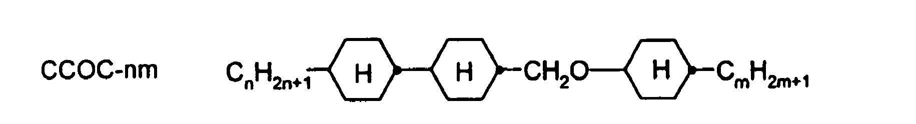

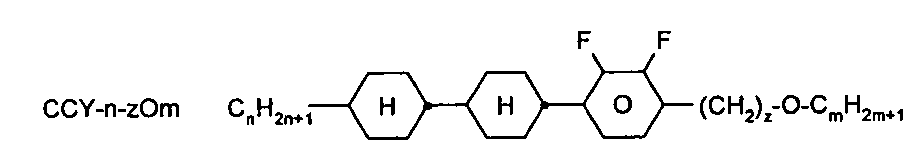

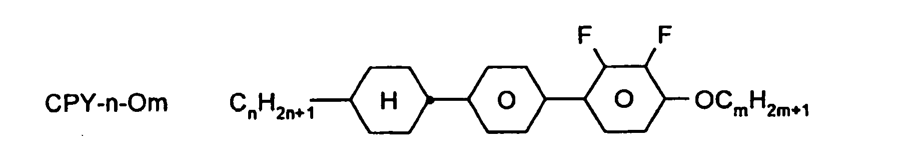

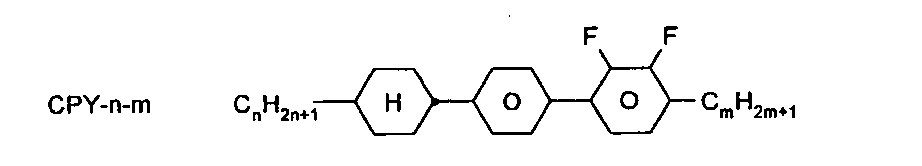

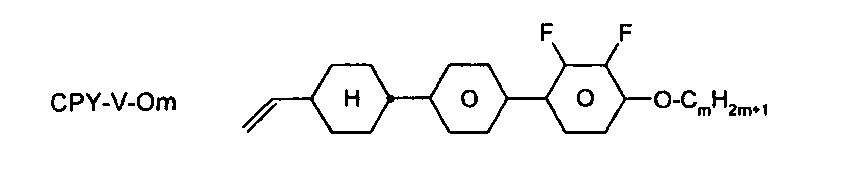

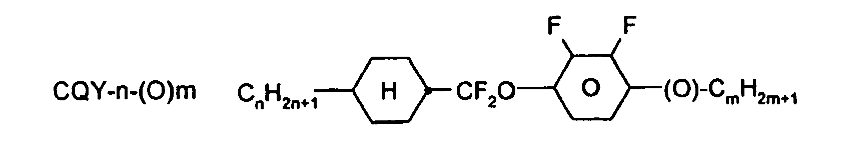

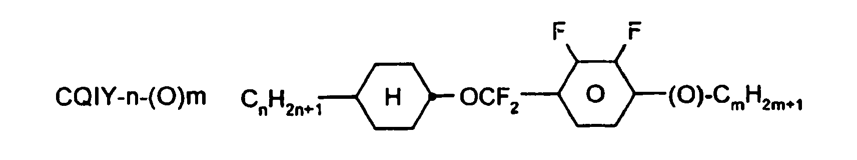

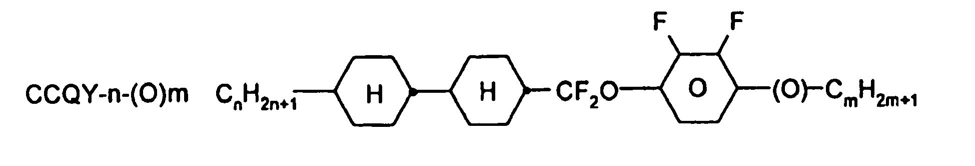

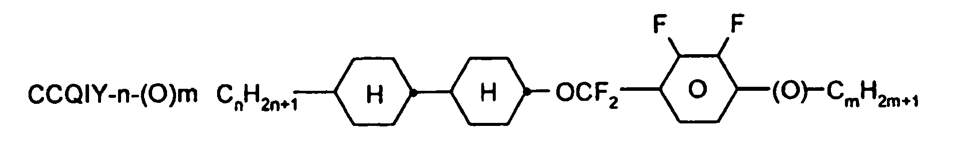

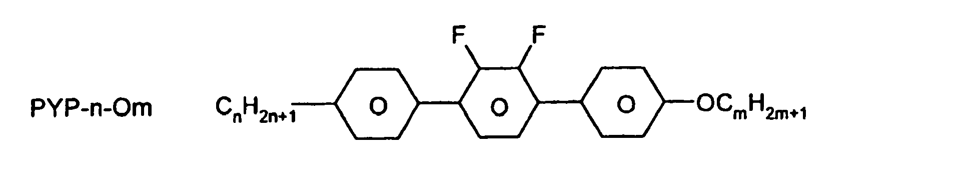

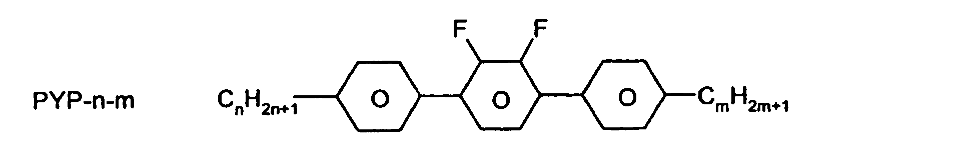

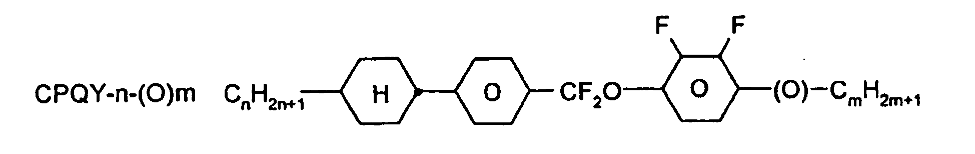

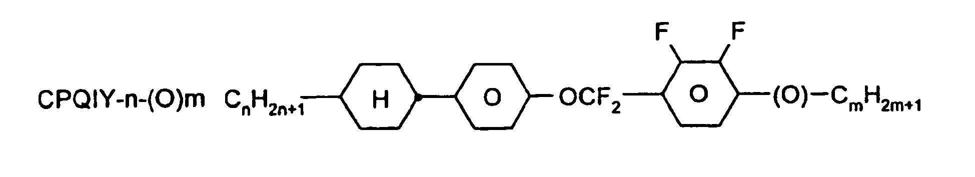

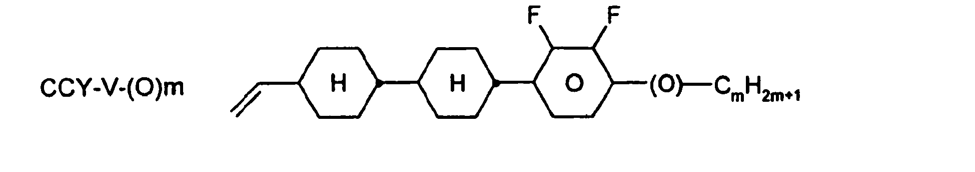

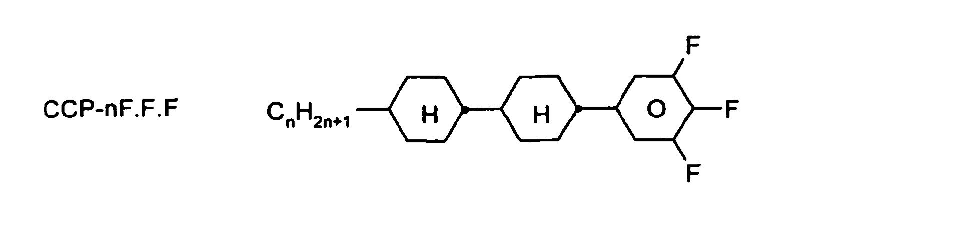

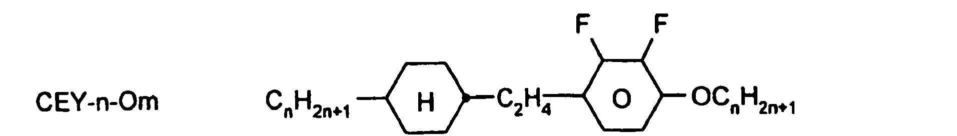

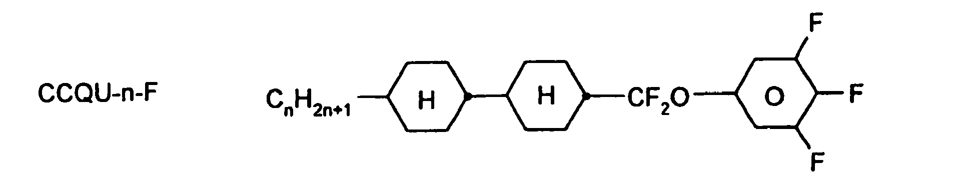

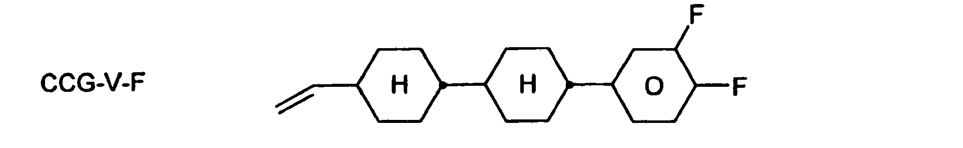

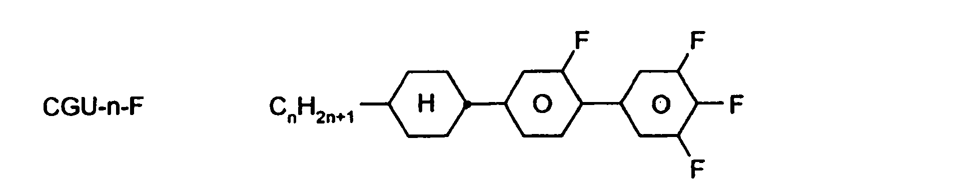

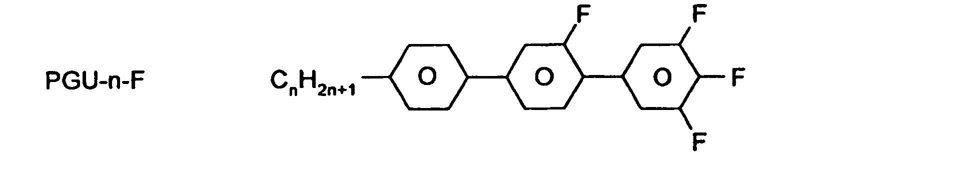

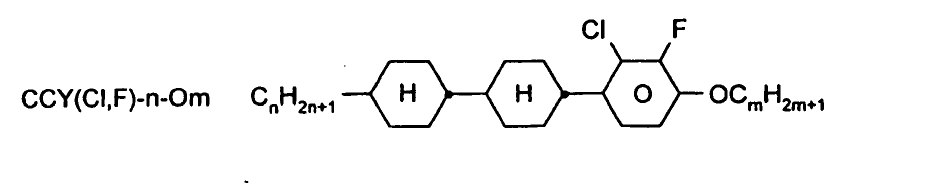

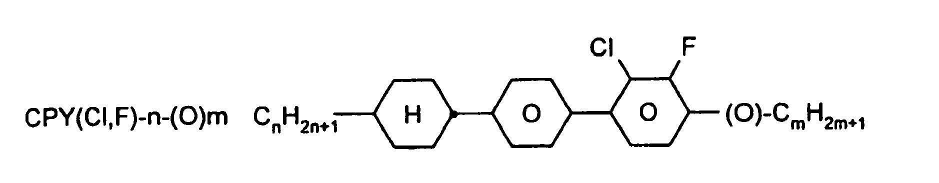

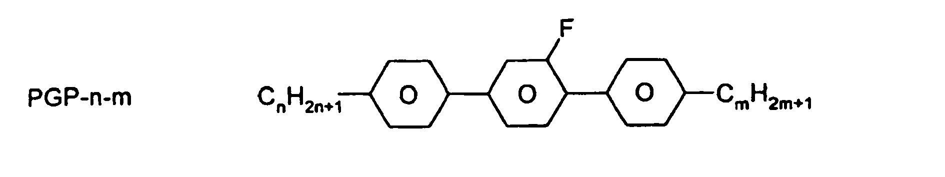

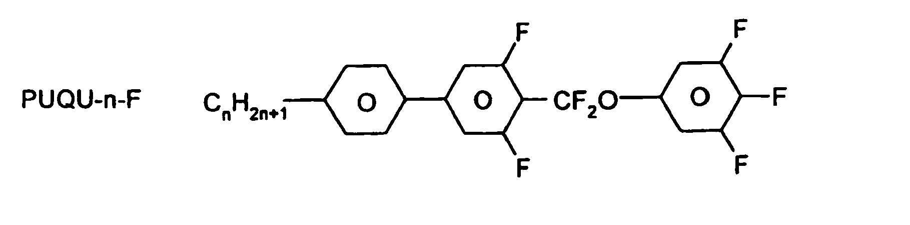

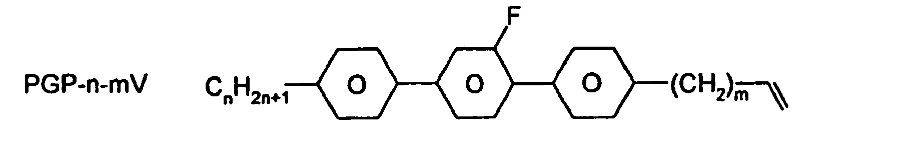

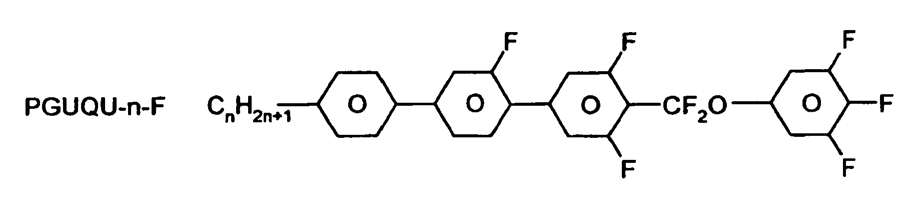

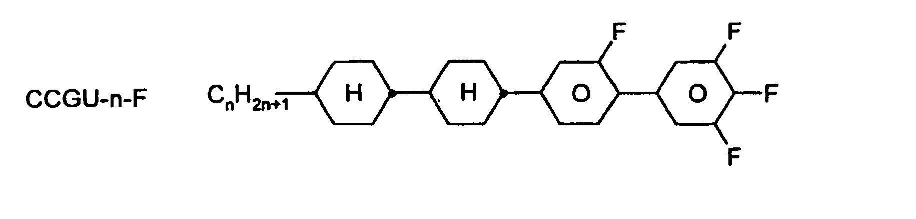

The liquid-crystal mixtures which can be used in accordance with the invention are prepared in a manner which is conventional per se. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after mixing.

The dielectrics may also comprise further additives known to the person skilled in the art and described in the literature, such as, for example, UV absorbers like Tinuvin 770 of Ciba Speciality Chemicals, antioxidants and free-radical scavengers. For example, 0-15% of pleochroic dyes, stabilisers or chiral dopants may be added.

For example, 0-15% of pleochroic dyes may be added, furthermore conductive salts, preferably ethyldimethyldodecylammonium 4-hexoxybenzoate, tetrabutylammonium tetraphenylboranate or complex salts of crown ethers (cf., for example, Haller et al., Mol. Cryst. Liq. Cryst. Volume 24, pages 249-258 (1973)) in order to improve the conductivity or substances may be added in order to modify the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

Table A shows possible dopants which can be added to the mixtures according to the invention. If the mixtures according to the invention comprise a dopant, it is generally added in amounts of 0.01 to 4.0% by weight, preferably 0.1 to 1.0% by weight.

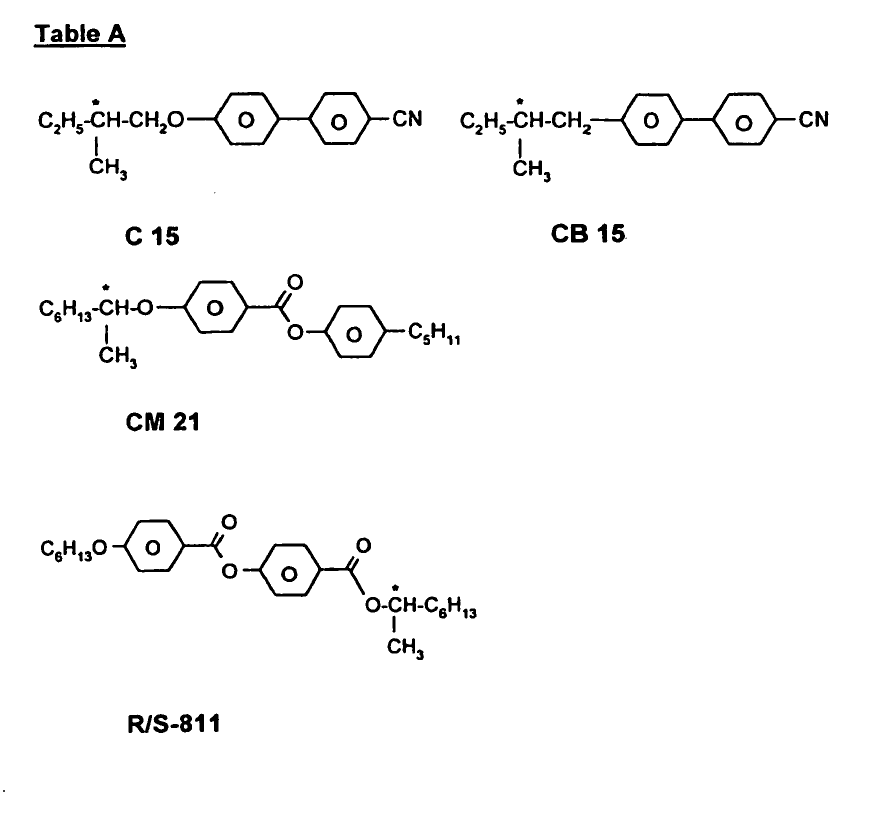

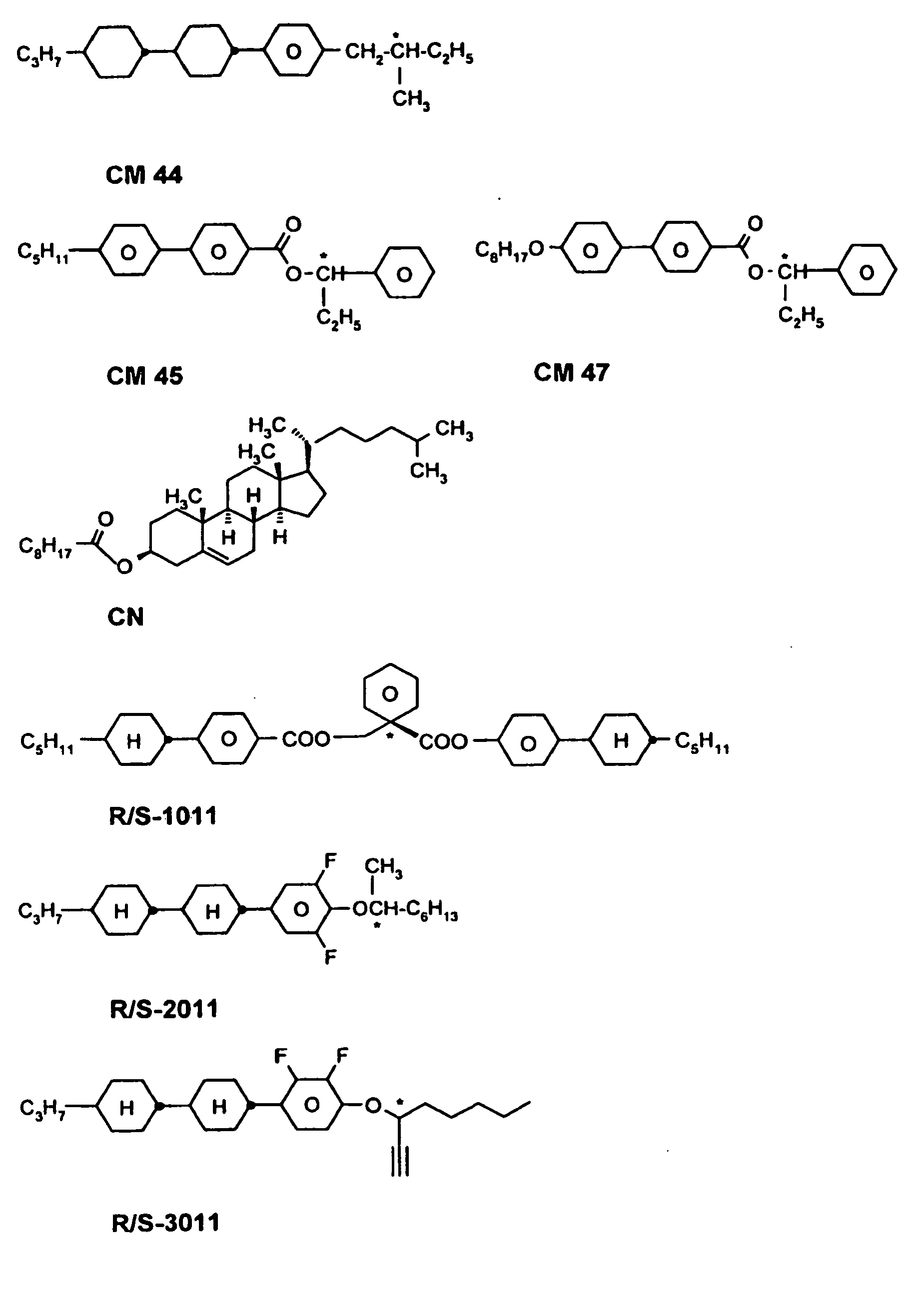

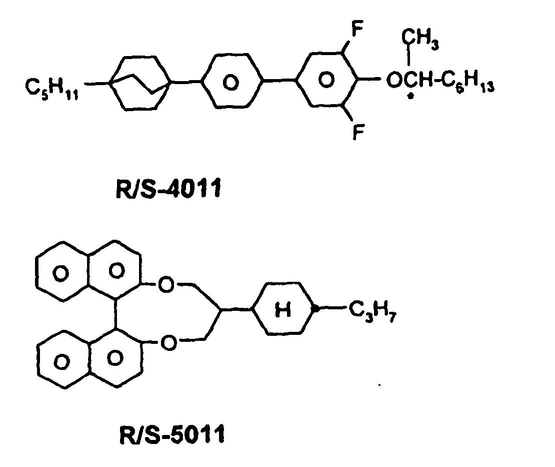

Stabilisers which can be added, for example, to the mixtures according to the invention are shown below in Table B.

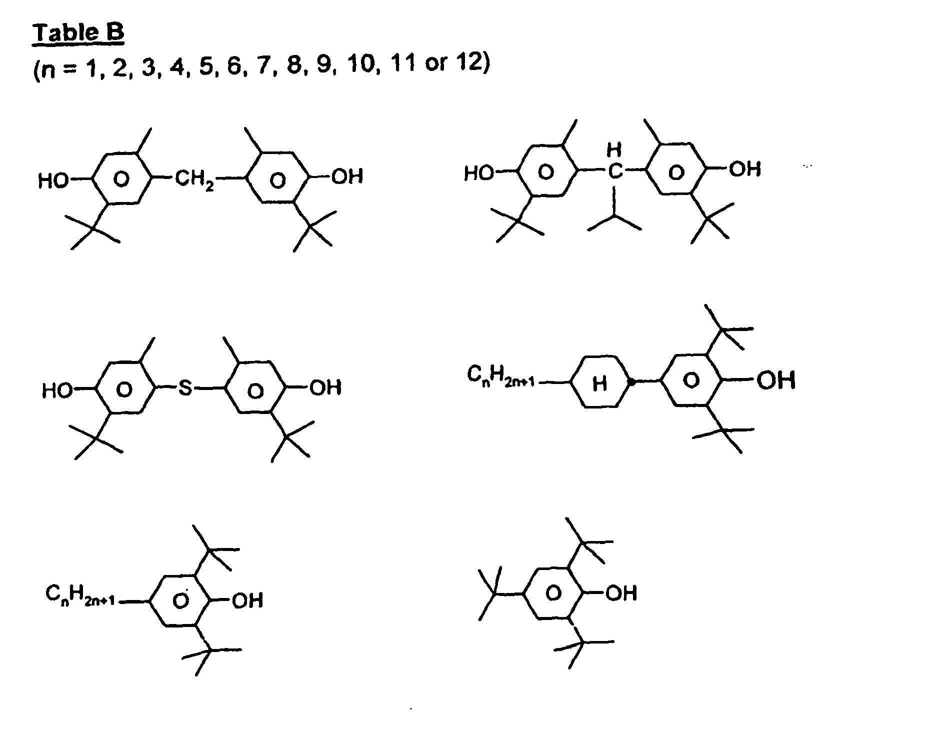

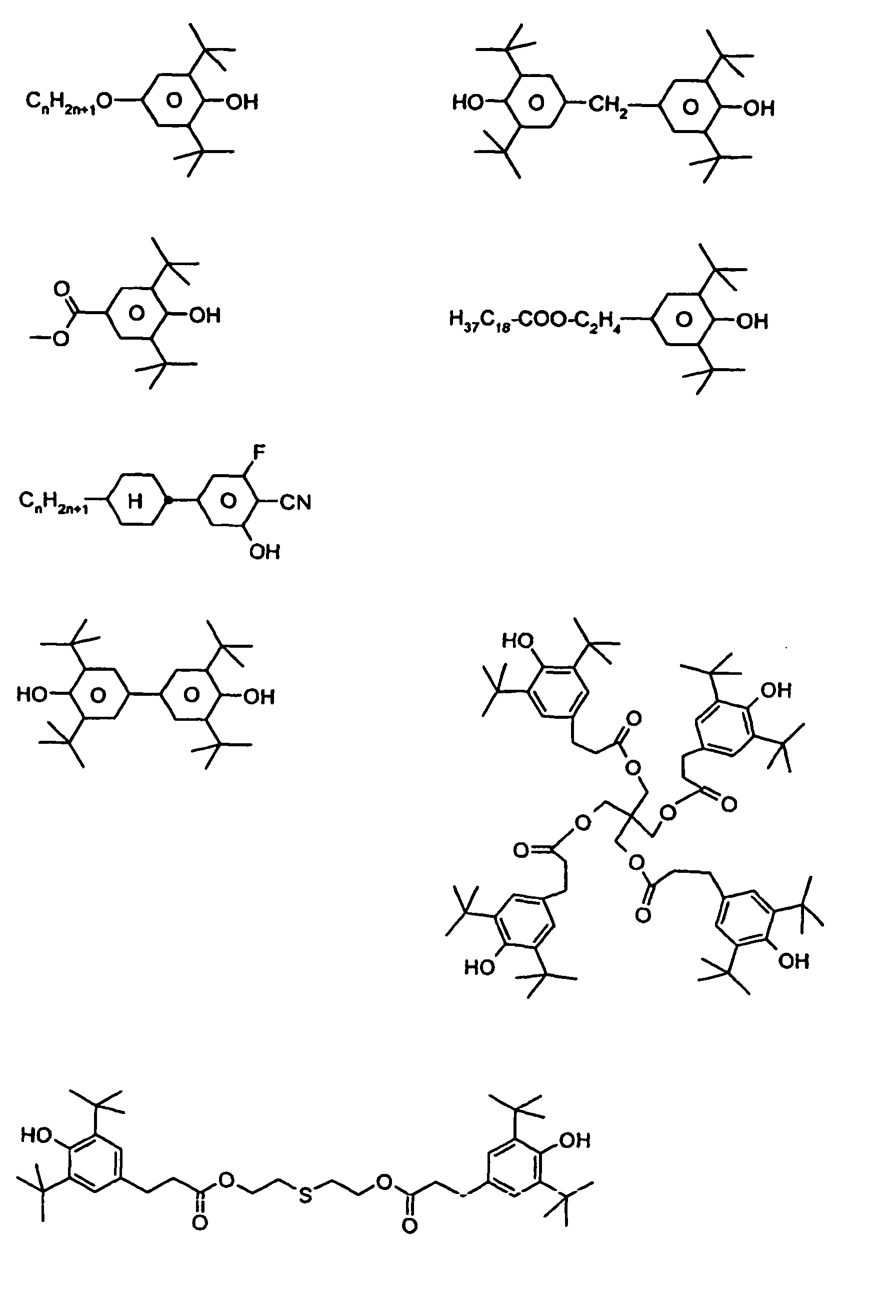

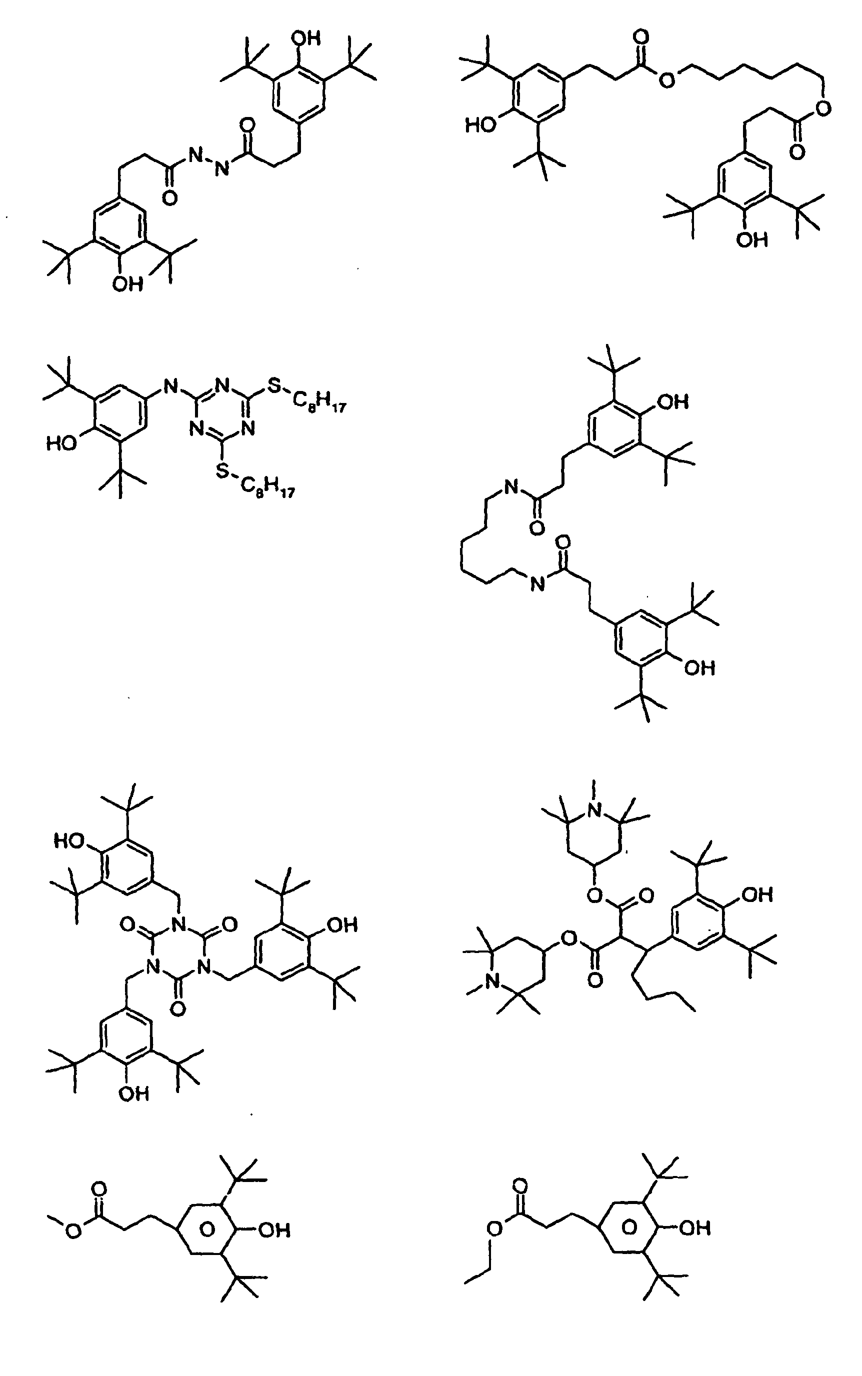

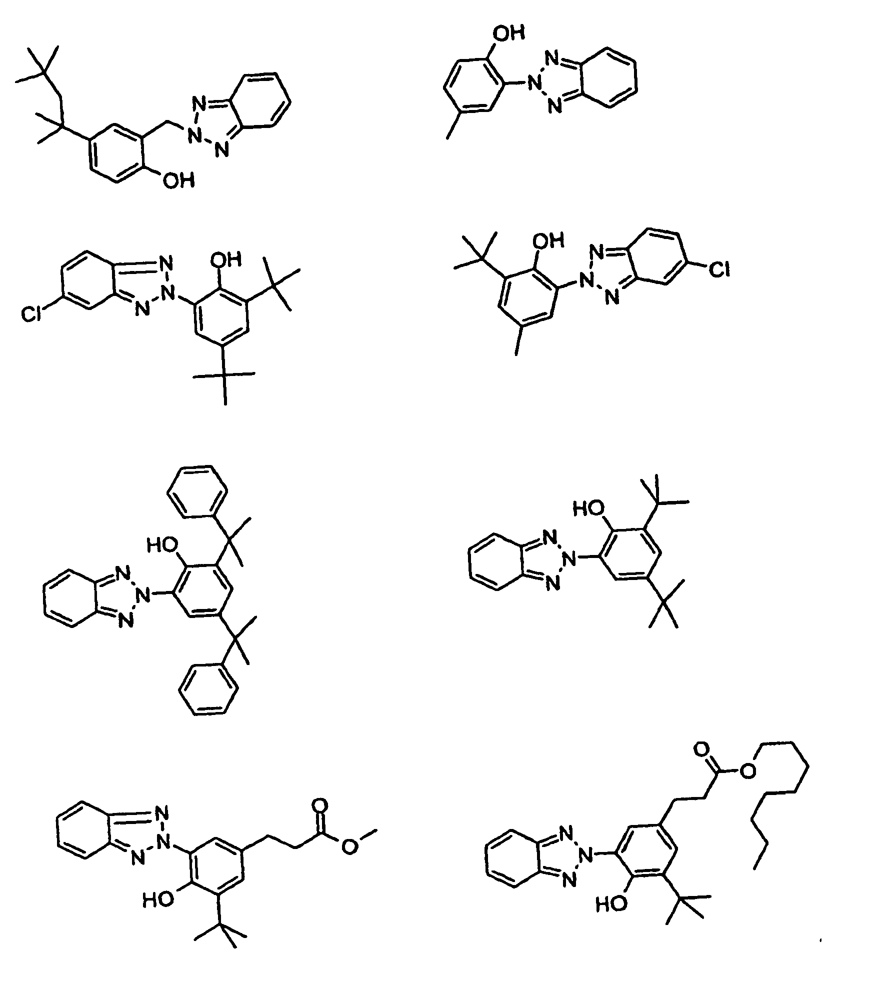

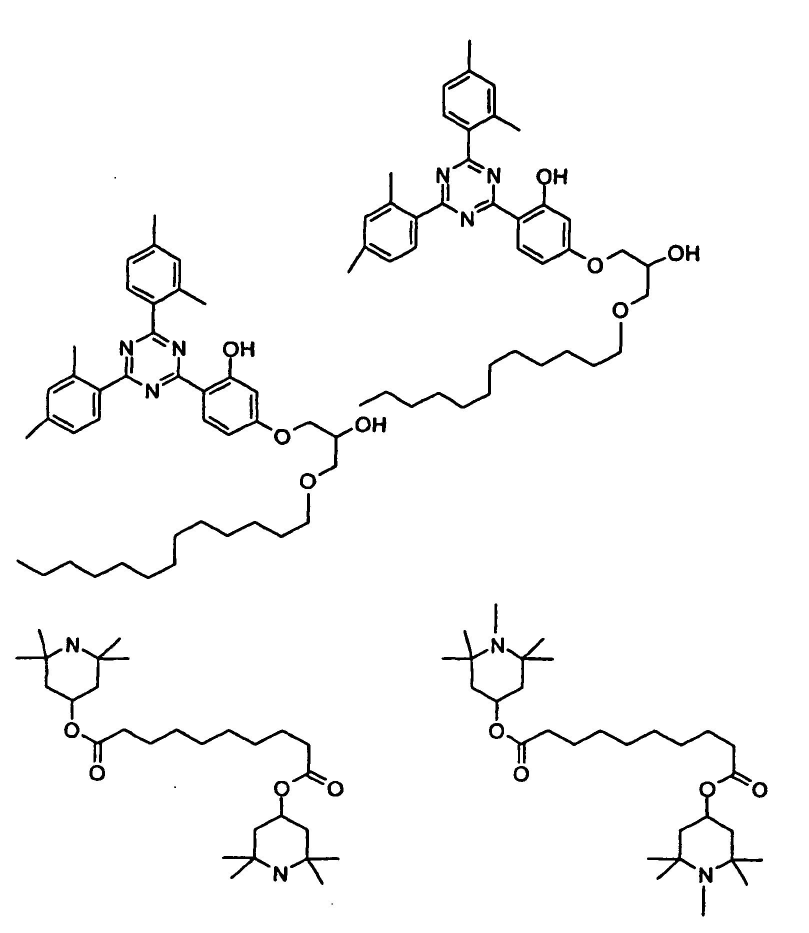

The following examples are intended to explain the invention without limiting it. Above and below,
- Vₒ: denotes the threshold voltage, capacitive [V] at 20°C
- Δn: denotes the optical anisotropy measured at 20°C and 589 nm
- Δε: denotes the dielectric anisotropy at 20°C and 1 kHz
- cp.: denotes the clearing point [°C]
- γ₁: denotes the rotational viscosity measured at 20°C [mPa·s]
- LTS: denotes the low temperature stability, determined in test cells and/or in the bulk state

For the purposes of the present invention, all concentrations are, unless explicitly stated otherwise, indicated in per cent by weight and relate to the corresponding mixture or mixture component. All physical properties are and have been determined in accordance with "Merck Liquid Crystals, Physical Properties of Liquid Crystals", Status Nov. 1997, Merck KGaA, Germany, and apply to a temperature of 20°C, unless explicitly stated otherwise. The rotational viscosity is determined by the rotating permanent magnet method or by the transient current method and the flow viscosity in a modified Ubbelohde viscometer.

The display used for measurement of the threshold voltage has two plane-parallel outer plates at a separation of 20 µm and electrode layers with overlying alignment layers of SE-1211 (Nissan Chemicals) on the insides of the outer plates, which effect a homeotropic alignment of the liquid crystals.

### Mixture Examples

### Example 1

| | | | |
|---|---|---|---|
| CY-5-O2 | 5.00% | Clearing point [°C]: | 80.0 |
| CCY-3-O2 | 9.00% | Δn [589 nm, 20°C]: | 0.0917 |
| CCY-3-O3 | 5.00% | ε_{∥} [1 kHz, 20°C]: | 4.3 |
| CPY-2-O2 | 11.00% | ε_{⊥} [1 kHz, 20°C]: | 7.0 |
| CPY-3-O2 | 12.00% | Δ_{ε} [1 kHz, 20°C]: | -3.4 |
| CCH-34 | 9.00% | K₁ [20°C]: | 12.9 |
| CCH-301 | 8.00% | K₃ [20°C]: | 3.5 |
| CC-3-V | 15.00% | γ₁ [mPa·s, 20°C]: | 117 |
| PCH-301 | 9.00 % | V₀[V] | 2.04 |
| 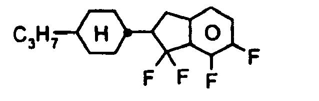 | 4.00% | | |
| 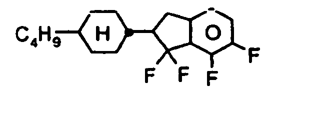 | 6.00% | | |
| 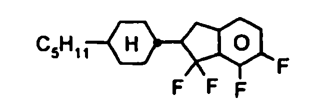 | 4.00% | | |
| CCP-3F.F.F | 3.00% | | |

### Example 2

| | | | |
|---|---|---|---|
| CY-3-02 | 18.00 % | Clearing point [°C]: | 80.5 |
| CY-5-02 | 6.50 % | Δn [589 nm, 20°C]: | 0.0905 |
| CCY-3-02 | 11.00 % | Δε [kHz, 20°C]: | -3.9 |
| CCY-4-02 | 10.00 % | ε_{∥} [kHz, 20°C]: | 3.9 |
| CCY-5-02 | 7.00 % | ∥_{⊥} [kHz, 20°C]: | 7.8 |
| CPY-2-02 | 5.00 % | | |
| CPY-3-02 | 9.00 % | | |
| CC-3-V | 32.50 % | | |
| PUQU-3-F | 1.00 % | | |

### Example 3

| | | | |
|---|---|---|---|
| CY-3-02 | 17.00 % | Clearing point [°C]: | 80.0 |
| CY-5-02 | 8.00 % | Δn [589 nm, 20°C]: | 0.0908 |
| CCY-3-02 | 9.00 % | Δε [kHz, 20°C]: | -3.8 |
| CCY-4-02 | 9.00 % | ε_{∥} [kHz, 20°C]: | 3.9 |
| CCY-5-02 | 7.00 % | ε_{⊥} [kHz, 20°C]: | 7.7 |
| CPY-2-02 | 7.00 % | | |
| CPY-3-02 | 9.00 % | | |
| CC-3-V | 32.00 % | | |
| CCQU-3-F | 2.00 % | | |

### Example 4

| | | | |
|---|---|---|---|
| CY-3-02 | 17.00 % | Clearing point [°C]: | 80.5 |
| CY-5-02 | 8.00 % | Δn [589 nm, 20°C]: | 0.0910 |
| CCY-3-02 | 9.00 % | Δε [kHz, 20°C]: | -3.8 |
| CCY4-02 | 9.00 % | ε_{∥} [kHz, 20°C]: | 3.9 |
| CCY-5-02 | 8.00 % | ε_{⊥} [kHz, 20°C]: | 7.7 |
| CPY-2-02 | 7.00 % | | |
| CPY-3-02 | 8.00 % | | |
| CC-3-V | 28.00 % | | |
| CCH-34 | 4.50 % | | |
| CGU-3-F | 1.50 % | | |

### Example 5

| | | | |
|---|---|---|---|
| CY-3-02 | 18.00 % | Clearing point [°C]: | 80.0 |
| CY-5-02 | 3.00 % | Δn [589 nm, 20°C]: | 0.0912 |
| CCY-3-02 | 11.00 % | Δε [kHz, 20°C]: | -3.3 |
| CCY-3-03 | 3.00 % | ε_{∥} [kHz, 20°C]: | 4.0 |
| CCY-4-02 | 9.00 % | ε_{⊥} [kHz, 20°C]: | 7.3 |
| CPY-2-02 | 9.00 % | | |
| CPY-3-02 | 9.00 % | | |
| CC-3-V | 34.50 % | | |
| CCP-3F.F.F | 3.50 % | | |

### Example 6

| | | | |
|---|---|---|---|
| CY-3-02 | 13.00 % | Clearing point [°C]: | 81.0 |
| CCY-3-02 | 12.00% | Δn [589 nm, 20°C]: | 0.0909 |
| CCY-3-03 | 7.50 % | Δε [kHz, 20°C]: | -3.3 |
| CPY-2-02 | 9.00 % | ε_{∥} [kHz, 20°C]: | 4.0 |
| CPY-3-02 | 6.00 % | ε_{⊥} [kHz, 20°C]: | 7.3 |
| CCH-34 | 5.50 % | | |
| CC-3-V | 31.00 % | | |
| CK-3-F | 4.00 % | | |
| CK-4-F | 4.00 % | | |
| PYP-2-3 | 3.00 % | | |
| CCG-V-F | 5.00 % | | |

### Example 7: Two bottle system

| Example 7a (Host) | | Example 7b | |
|---|---|---|---|
| CY-3-02 | 17.00 % | PGU-2-F | 7.00 % |
| CY-5-02 | 8.00 % | PGU-3-F | 10.00 % |
| CCY-3-02 | 9.00 % | PUQU-3-F | 8.00 % |
| CCY-3-03 | 9.00 % | CC-3-V1 | 9.00 % |
| CCY-4-02 | 7.00 % | CC-3-V | 39.00 % |
| CPY-2-02 | 8.00 % | CCP-V-1 | 6.00 % |
| CPY-3-02 | 8.00 % | CCP-V2-1 | 7.00 % |
| CC-3-V | 24.00 % | CCGU-3-F | 2.00 % |
| CH-34 | 5.00 % | CBC-33 | 2.00 % |
| CCH-35 | 5.00 % | PGP-2-3 | 5.00 % |
| | | PGP-2-4 | 5.00 % |
| Clearing point [°C]: | 80.5 | | |
| Δn [589 nm, 20°C]: | 0.0892 | Clearing point [°C]: | 74.5 |
| Δε [kHz, 20°C]: | -4.0 | Δn [589 nm, 20°C]: | 0.1154 |
| ε_{∥} [kHz, 20°C]: | 3.6 | Δε [kHz, 20°C]: | -5.3 |
| ε_{⊥}: [kHz, 20°C]: | 7.7 | ε_{∥} [kHz, 20°C]: | 8.3 |
| | | ε_{⊥} [kHz, 20°C]: | 3.1 |
| | | K₁ [20°C:] | 13.00 |
| | | γ₁ [mPa·s, 20 °C]: | 58.00 |

Bigger ε_{∥} and ε_{⊥} values are obtained by adding mixture of Example 7b having a positive Δε into the host mixture of Example 7a:
93 % of Mixture of Example 7a (Host) + 7 % of Mixture of Example 7b:

| | | | |
|---|---|---|---|
| Clearing point [°C]: | 80.0 | | |
| Δn [589 nm, 20°C]: | 0.091 | | |
| Δε [kHz, 20°C]: | -3.3 | | |
| ε_{∥} [kHz, 20°C]: | 3.9 | | |
| ε_{⊥} [kHz, 20°C]: | 7.3 | | |

### Example 8: Two bottle system

### Example 8a

| | | | |
|---|---|---|---|
| CY-3-02 | 18.00 % | Clearing point [°C]: | 80.0 |
| CY-5-02 | 7.00 % | Δn [589 nm, 20°C]: | 0.0901 |
| CCY-3-02 | 9.00 % | Δε [kHz, 20°C]: | -4.0 |
| CCY-3-03 | 6.00 % | ε_{∥} [kHz, 20°C]: | 3.6 |
| CCY-4-02 | 7.00 % | ε_{⊥} [kHz, 20°C]: | 7.6 |
| CPY-2-02 | 9.00 % | | |
| CPY-3-02 | 9.00 % | | |
| CC-3-V | 13.00 % | | |
| CCH-34 | 8.00 % | | |
| CCH-35 | 8.00 % | | |
| CCH-301 | 4.00 % | | |

94 % of Mixture of Example 8a (Host) + 6 % of Mixture of Example 7b:

| | |
|---|---|
| Clearing point [°C]: | 80.0 |
| Δn [589 nm, 20°C]: | 0.0912 |
| Δε [kHz, 20°C]: | -3.4 |
| ε_{∥} [kHz, 20°C]: | 3.9 |
| ε_{⊥} [kHz, 20°C]: | 7.3 |

### Example 9

| | | | |
|---|---|---|---|
| CY-3-02 | 19.00 % | Clearing point [°C]: | 81.5 |
| CY-5-02 | 5.00 % | Δn [589 nm, 20°C]: | 0.0915 |
| CCY-3-02 | 10.00 % | Δε [kHz, 20°C]: | -3.4 |
| CCY-4-02 | 9.00 % | ε_{∥} [kHz, 20°C]: | 3.9 |
| CPY-2-02 | 10.00 % | ε_{⊥} [kHz, 20°C]: | 7.3 |
| CPY-3-02 | 9.00 % | | |
| CC-3-V | 17.00 % | | |
| CCP-3F.F.F | 3.50 % | | |
| CCH-34 | 9.00 % | | |
| CCH-35 | 8.50 % | | |

### Example 10

| | | | |
|---|---|---|---|
| CY-3-02 | 18.00 % | Clearing point [°C]: | 80.0 |
| CY-5-02 | 3.00 % | Δn [589 nm, 20°C]: | 0.0912 |
| CCY-3-02 | 11.00 % | Δε [kHz, 20°C]: | -3.3 |
| CCY-3-03 | 3.00 % | ε_{∥} [kHz, 20°C]: | 4.0 |
| CCY-4-02 | 9.00 % | ε_{⊥} [kHz, 20°C]: | 7.3 |
| CPY-2-02 | 9.00 % | | |
| CPY-3-02 | 9.00 % | | |
| CC-3-V | 34.50 % | | |
| CCP-3F.F.F | 3.50 % | | |

### Example 11

| | | | |
|---|---|---|---|
| CY-3-02 | 20.00 % | Cleaning point [°C]: | 80.0 |
| CY-5-02 | 6.50 % | Δn [589 nm, 20°C]: | 0.0912 |
| CCY-3-02 | 12.00 % | Δε [kHz, 20°C]: | -3.6 |
| CCY-4-02 | 10.00 % | ε_{∥} [kHz, 20°C]: | 4.3 |
| CCY-5-02 | 3.50 % | ε_{⊥} [kHz, 20°C]: | 7.9 |
| CPY-2-02 | 4.50 % | | |
| CPY-3-02 | 10.00 % | | |
| CC-3-V | 28.50 % | | |
| CCP-3F.F.F | 5.00 % | | |

### Example 12

| | | | |
|---|---|---|---|
| CY-3-02 | 18.00 % | Clearing point [°C]: | 80.5 |
| CY-5-02 | 11.00 % | Δn [589 nm, 20°C]: | 0.0913 |
| CCY-3-02 | 12.00 % | Δε [kHz, 20°C]: | -3.6 |
| CCY-4-02 | 9.00 % | ε_{∥} [kHz, 20°C]: | 4.6 |
| CCY-5-02 | 6.00 % | ε_{⊥} [kHz, 20°C]: | 8.2 |
| CPY-2-02 | 3.50 % | | |
| CPY-3-02 | 9.00 % | | |
| CC-3-V | 24.50 % | | |
| CCP-3F.F.F | 7.00 % | | |

### Example 13

| | | | |
|---|---|---|---|
| CY-3-02 | 10.00 % | Clearing point [°C]: | 81.0 |
| CCY-3-02 | 10.50 % | Δn [589 nm, 20°C]: | 0.0909 |
| CCY-4-02 | 9.00 % | Δε [kHz, 20°C]: | -3.6 |
| CPY-2-02 | 9.00 % | ε_{∥} [kHz, 20°C]: | 4.7 |
| CPY-3-02 | 9.00 % | ε_{⊥} [kHz, 20°C]: | 8.3 |
| CC-3-V | 29.00 % | | |
| CCP-3F.F.F | 5.00 % | | |
| PCH-301 | 4.50 % | | |
| CK-3-F | 3.00 % | | |
| CK-4-F | 8.00 % | | |
| CK-5-F | 3.00 % | | |

## Claims

1. Liquid-crystalline medium based on a mixture of polar compounds having negative dielectric anisotropy (Δε), **characterized in that** it contains at least one compound selected from the group of compounds of the formula I, IIA and IIB 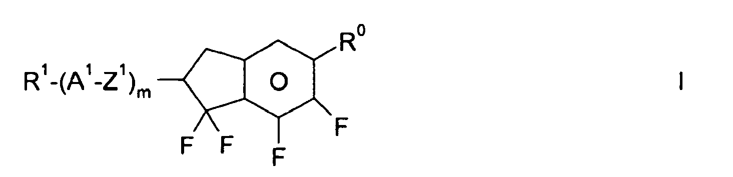 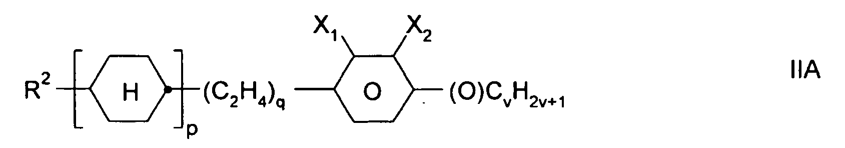 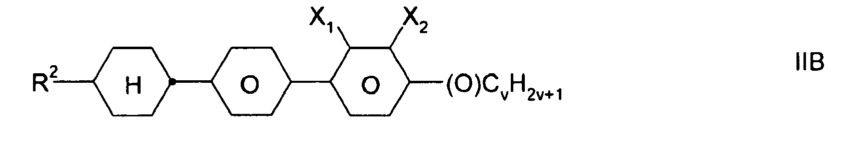 and at least one compound of the formula I* 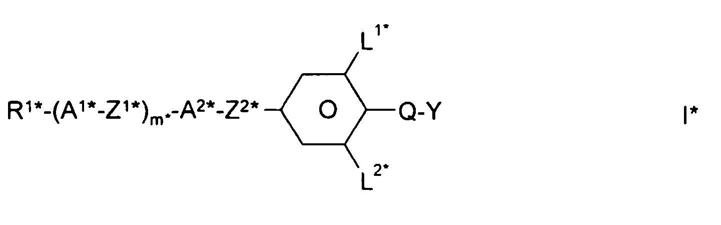 in which
R⁰, R¹, R² and R^{1*} each, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 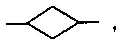 -C≡C-, -CF₂O-, -OCF₂- -OC-O- or -O-CO- in such a way that O atoms are not linked directly to one another,
A¹, A^{1*}, A^{2*} each, independently of each other
a) denote a 1,4-cyclohexenylene or 1,4-cyclohexylene radical, in which one or two non-adjacent CH₂ groups may be replaced by -O- or -S-,
b) denote a 1,4-phenylene radical, in which one or two CH groups may be replaced by N,
c) denote a radical from the group consisting of piperidine- 1,4-diyl-, 1,4-bicyclo[2.2.2]octylene-, naphthalene-2,6- diyl, decahydronaphthalene-2,6-diyl, 1,2,3,4-tetrahydro- naphthalene-2,6-diyl, phenanthrene-2,7-diyl and fluorene-2,7-diyl, where the radicals a), b) and c) may be mono- or polysubstituted by halogen atoms,
Z¹, Z^{1*} and Z^{2*} each, independently of one another denote -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- or a single bond, and
m and m* each independently of one another denote 0, 1 or 2
p denotes 1 or 2
q denotes 0 or 1
v denotes 1 to 6
L^{1*} and L^{2*} each independently of one another denote H or F
X¹ and X² each independently of one another denote, F, Cl, CHF_{2,} CF₃, OCHF₂ or OCF₃
Q single bond, -CF₂-, -CHF-, -OCF₂- or -OCHF- and
Y F or Cl.

2. Liquid-crystalline medium according to Claim 1, **characterised in that** it contains at least one compound selected from the formulae I1 to I18 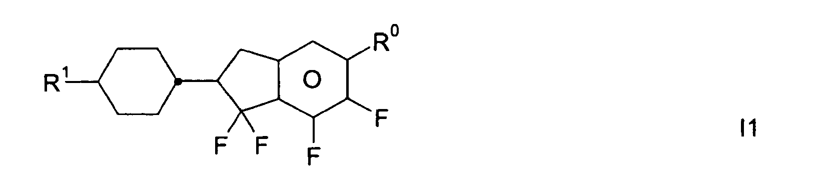 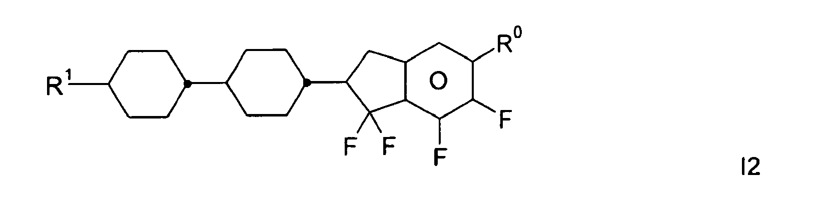 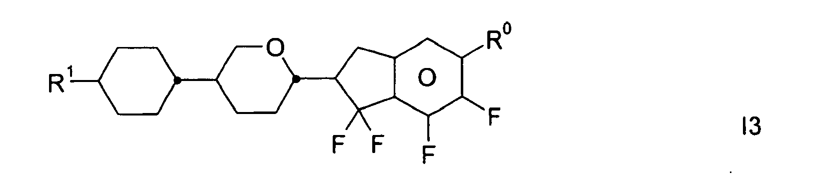 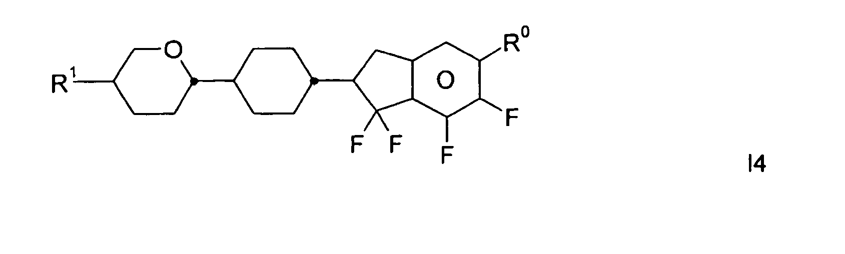 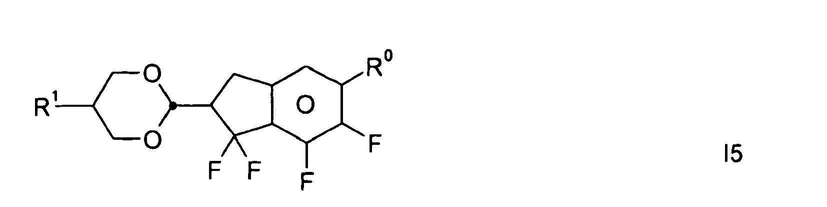 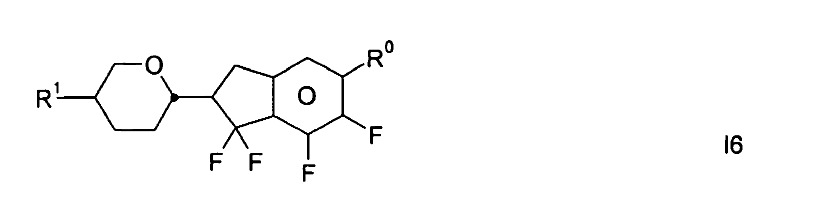 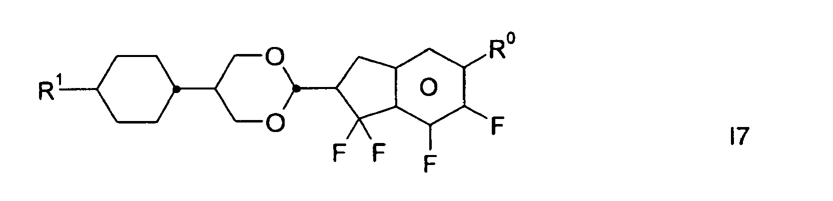 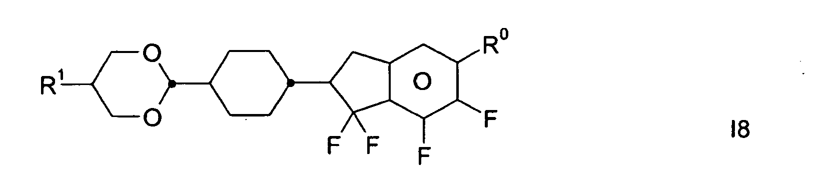 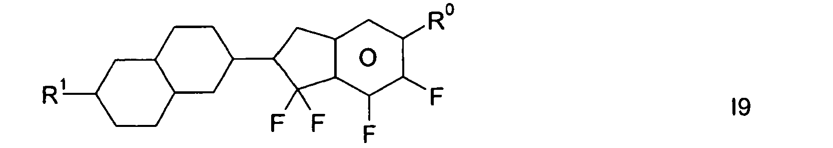 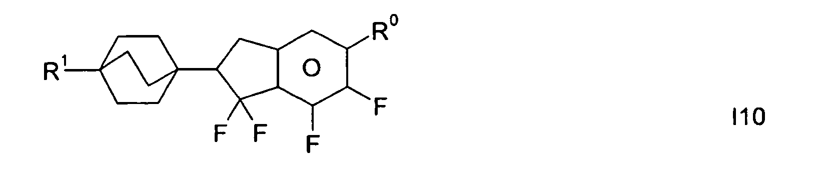 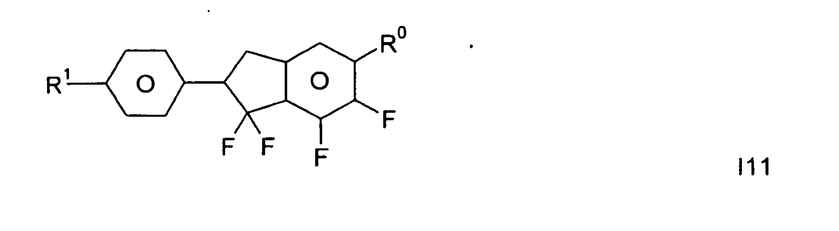 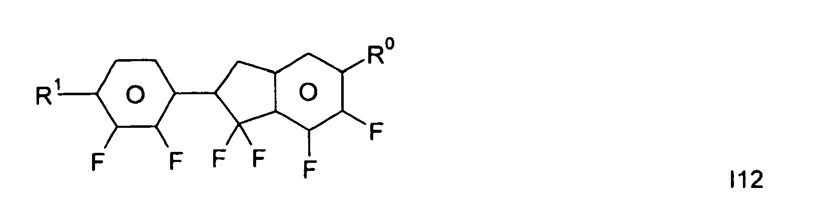 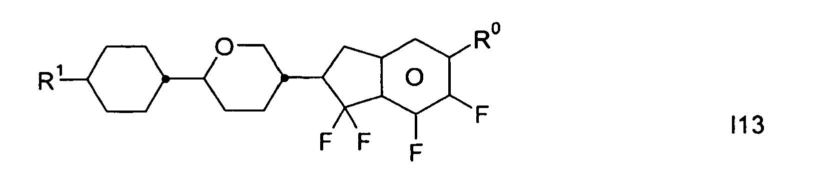 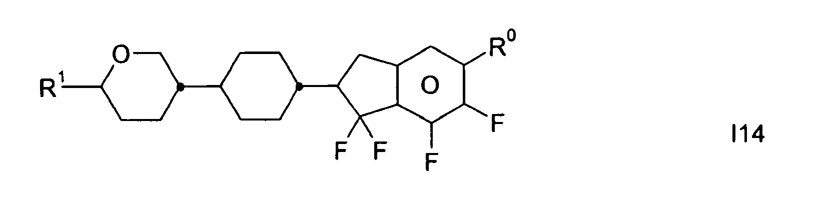 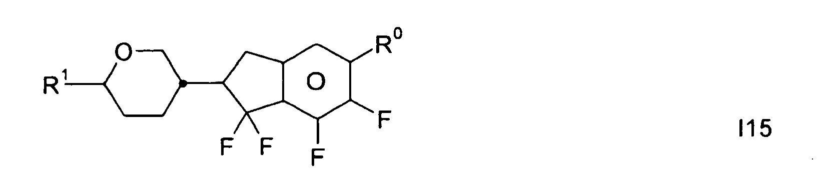 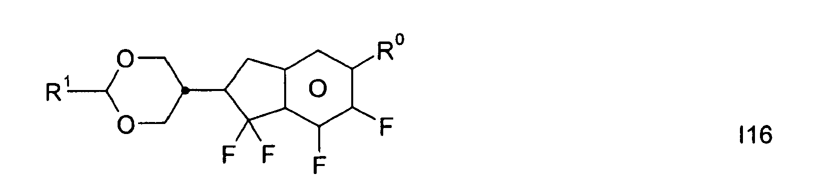 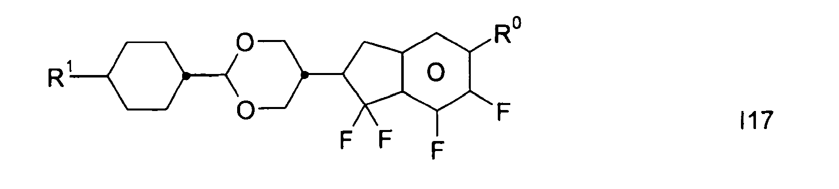 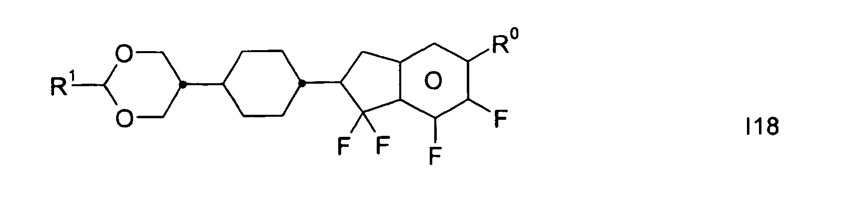 in which
R⁰ and R¹ have the meanings indicated in Claim 1.

3. Liquid-crystalline medium according to Claim 1 or 2, **characterized in that** it contains at least one compound selected from the formulae I*-1 to I*-11 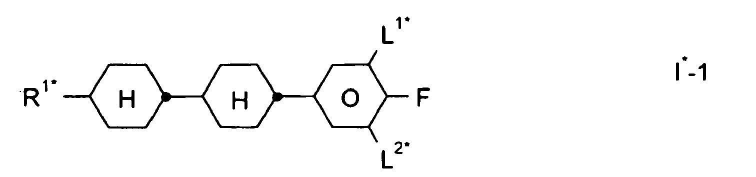 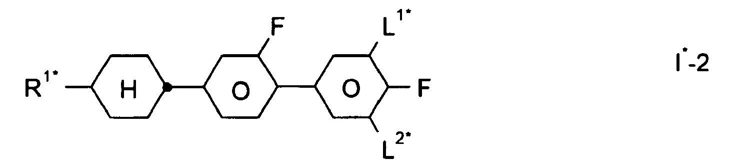 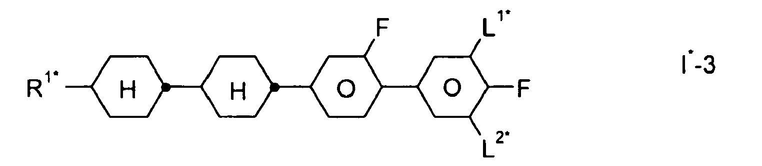 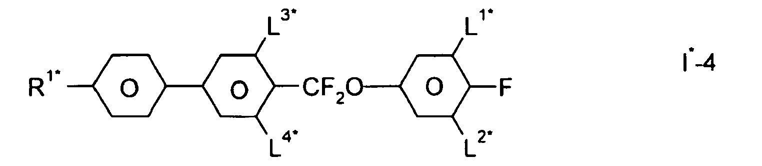 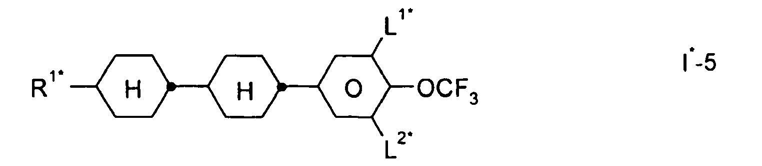 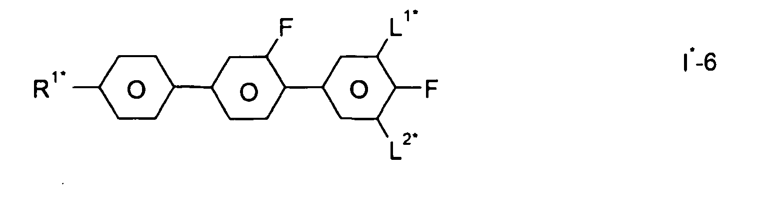 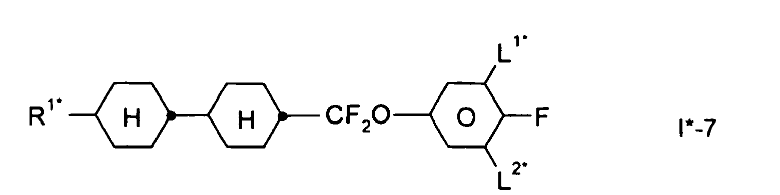 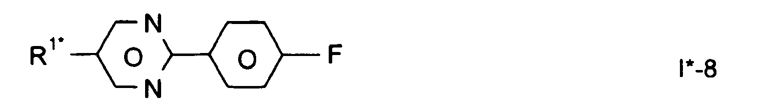 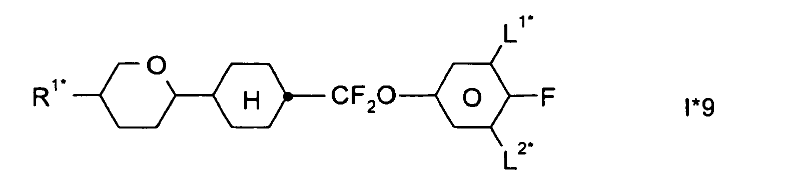 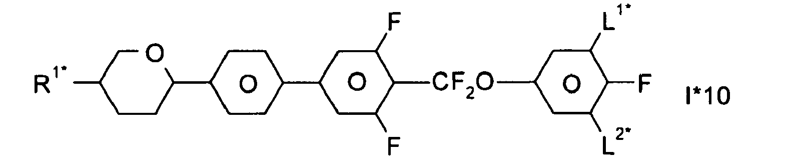 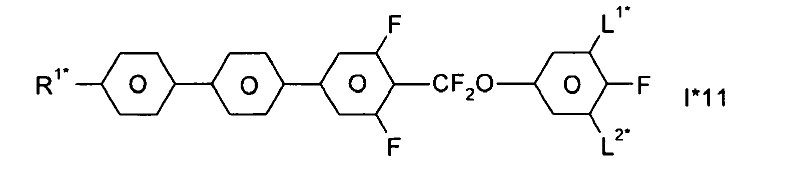 in which
R^{1*}, L^{1*} and L^{2*} have the meanings indicated in Claim 1 and L^{3*} and L^{4*} each independently denote H or F.

4. Liquid crystalline medium according to any of Claims 1 to 3, **characterised in that** L^{1*} is F and L^{2*} is H or F.

5. Liquid crystalline medium according to any of Claims 1 to 4, **characterised in that** L^{1*} = L^{2*} = F.

6. Liquid-crystalline medium according to any of Claims 1 or 5, **characterised in that** R⁰ denotes H.

7. Liquid-crystalline medium according to any of Claims 1 to 6, **characterised in that** it contains at least one compound of the formula I1.

8. Liquid-crystalline medium according to any of Claims 1 to 7, **characterised in that** it contains at least one compound of the formula IIB 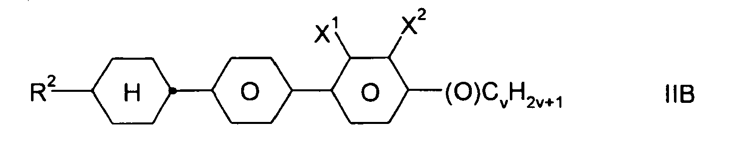 in which
R² and v have the meanings given in Claim 1 and X¹ and X² both denote F.

9. Liquid-crystalline medium according to any of Claims 1 to 8, **characterised in that** it additionally contains one or more compounds of the formula I*-1a 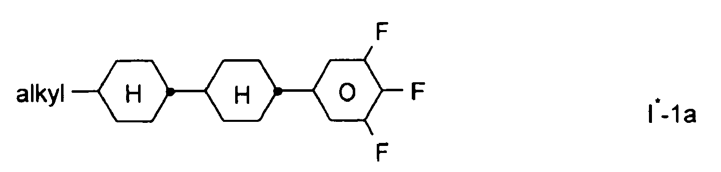 wherein alkyl denotes a straight chain alkyl radical having 1-6 carbon atoms.

10. Liquid-crystalline medium according to any of Claims 1 to 9, **characterised in that** it additionally contains one or more compounds of the formula III 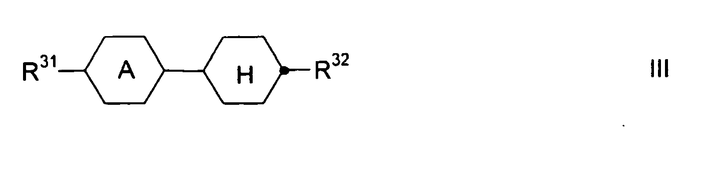 in which
R³¹ and R³² each, independently of one another, denote a straight- chain alkyl, alkenyl, alkylalkoxy or alkoxy radical having up to 12 C atoms, and 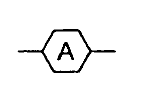 denotes 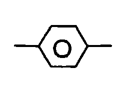 or

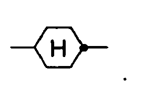

11. Liquid-crystalline medium according to any of Claims 1 to 10, **characterised in that** it contains one, two, three, four or more compounds of the formulae I, IIA and/or IIB.

12. Liquid-crystalline medium according to any of Claims 1 to 11, **characterised in that** the proportion of compounds of the formula I in the mixture as a whole is at least 5 % by weight.

13. Liquid-crystalline medium according to any of Claims 1 to 12, **characterised in that** the proportion of compounds of the formula I* in the mixture as a whole is ≤ 10 % by weight.

14. Liquid-crystalline medium according to any of Claims 1 to 13, **characterised in that** the proportion of compounds of the formulae IIA and/or IIB in the mixture as a whole is at least 20 % by weight.

15. Liquid-crystalline medium according to any of Claims 1 to 14, **characterised in that** the proportion of compounds of the formula III in the mixture as a whole is at least 5 % by weight.

16. Liquid-crystalline medium which contains
| | |
|---|---|
| 5-30 % by weight | of one or more compounds of the formulae I and one or more compounds of the formula I* |
| or | |
| 20-70 % by weight | of one or more compounds selected from the formula IIA and/or IIB and one or more compounds of the formula I* |
| or | |
| 10-100 % by weight | of one or more compounds of the formulae I, one or more compounds selected from the formula IIA and/or IIB and one or more compounds of the formula I* |
based on the total mixture.

17. Electro-optical display with active-matrix addressing based on the ECB, VA, PS-VA, PALC, IPS or FFS effect, **characterised in that** it contains, as dielectric, a liquid-crystalline medium according to one of Claims 1 to 16.

## Patentansprüche

1. Flüssigkristallines Medium auf der Basis eines Gemisches von polaren Verbindungen mit negativer dielektrischer Anisotropie (Δε), **dadurch gekennzeichnet, dass** es mindestens eine Verbindung ausgewählt aus der Gruppe der Verbindungen der Formeln I, IIA und IIB 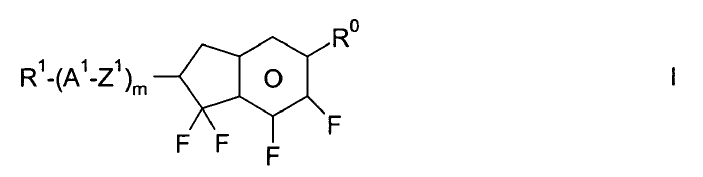 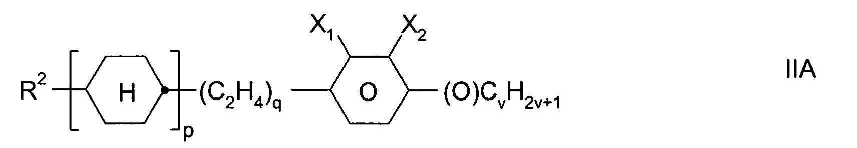 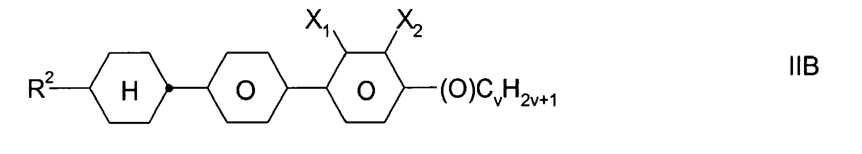 und mindestens eine Verbindung der Formel I* 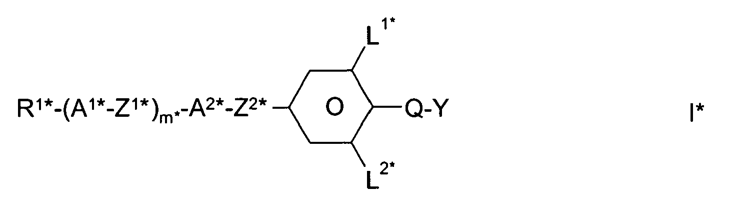 worin
R⁰, R¹, R² und R^{1*} jeweils unabhängig voneinander H, unsubstituierten, einfach durch CN oder CF₃ oder mindestens einfach durch Halogen substituierten Alkyl- oder Alkoxyrest mit bis zu 15 C-Atomen, wobei in diesen Resten auch eine oder mehrere CH₂-Gruppen durch -O-, -S-, 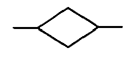 , -C≡C-, -CF₂O-, -OCF₂- -OC-O- oder -O-CO- so ersetzt sein können, dass O-Atome nicht direkt miteinander verknüpft sind,
A¹, A^{1*}, A^{2*} jeweils unabhängig voneinander
a) einen 1,4-Cyclohexenylen- oder 1,4-Cyclohexylenrest, worin eine oder zwei nicht benachbarte CH₂-Gruppen durch -O- oder -S- ersetzt sein können,
b) einen 1,4-Phenylenrest, worin eine oder zwei CH- Gruppen durch N ersetzt sein können,
c) einen Rest aus der Gruppe bestehend aus Piperidin-1,4- diyl, 1,4-Bicyclo[2.2.2]-octylen, Naphthalin-2,6-diyl, Decahydronaphthalin-2,6-diyl, 1,2,3,4-Tetrahydronaph- thalin-2,6-diyl, Phenanthren-2,7-diyl und Fluoren-2,7- diyl,
wobei die Reste a), b) und c) ein oder mehrfach durch Halogen- atome substituiert sein können,
Z¹, Z^{1*} und Z^{2*} jeweils unabhängig voneinander -CO-O-, -O-CO-, -CF₂O-, -OCF₂-, -CH₂O-, -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C=C- oder eine Einfachbindung, und
m und m jeweils unabhängig voneinander 0, 1 oder 2
p 1 oder 2
q 0 oder 1
v 1 bis 6
L^{1*} und L^{2*} jeweils unabhängig voneinander H oder F
X¹ und X² jeweils unabhängig voneinander F, Cl, CHF₂, CF₃, OCHF₂ oder OCF₃
Q eine Einfachbindung, -CF₂-, -CHF-, -OCF₂- oder -OCHF- und
Y F oder Cl,
bedeuten,
enthält.

2. Flüssigkristallines Medium nach Anspruch 1, **dadurch gekennzeichnet, dass** es mindestens eine Verbindung ausgewählt aus den Formeln I1 bis 118 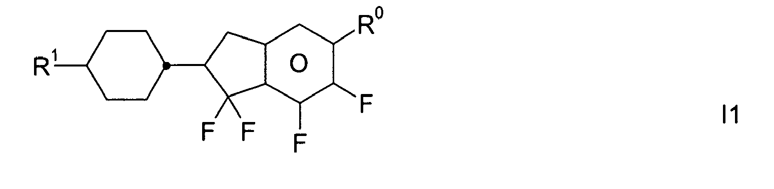 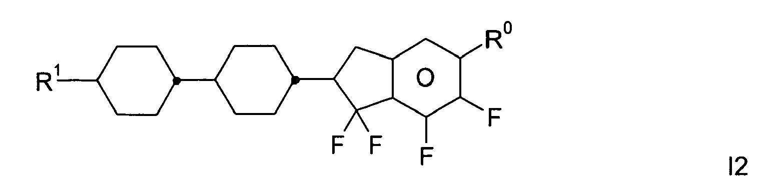 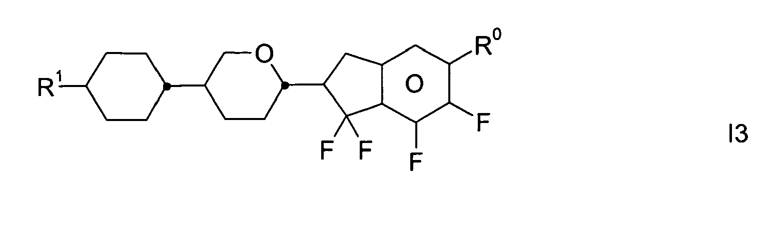 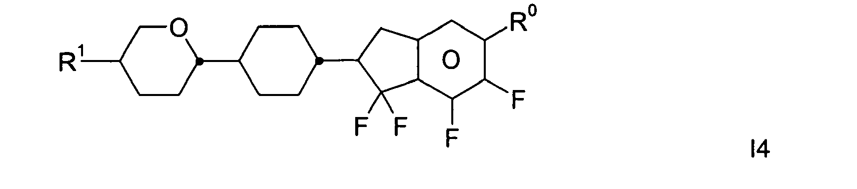 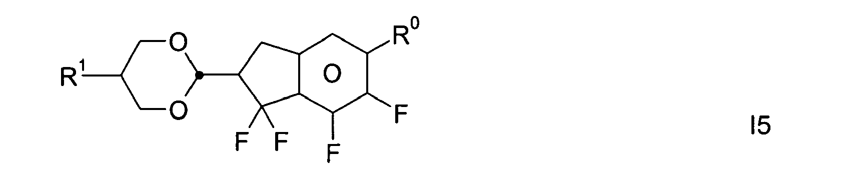 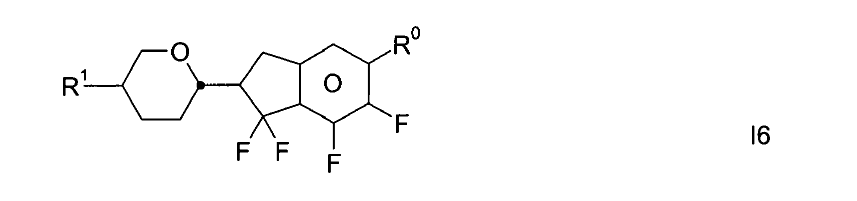 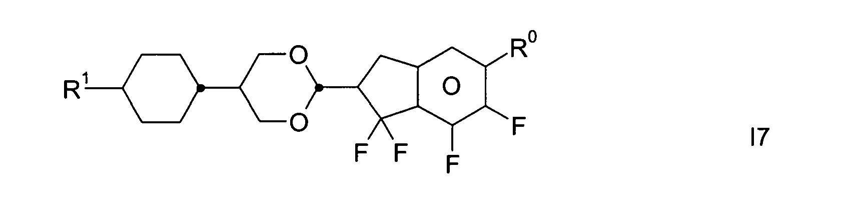 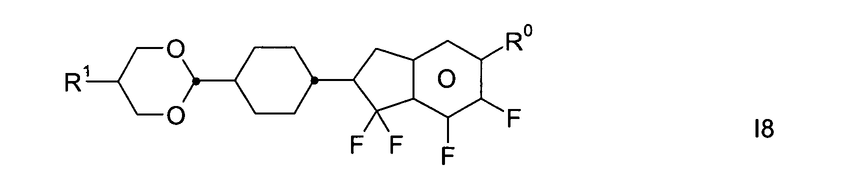 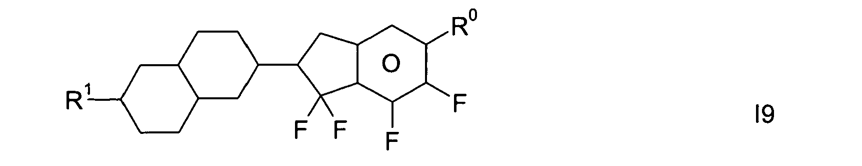 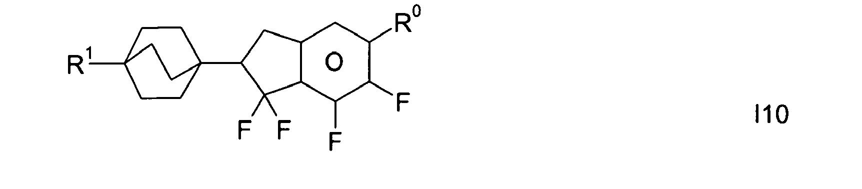 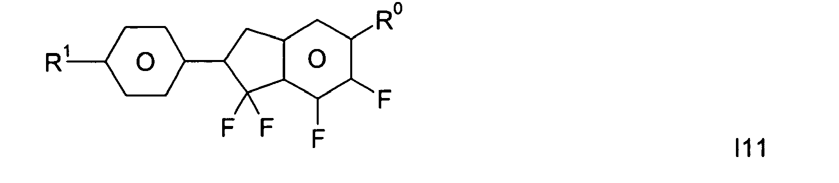 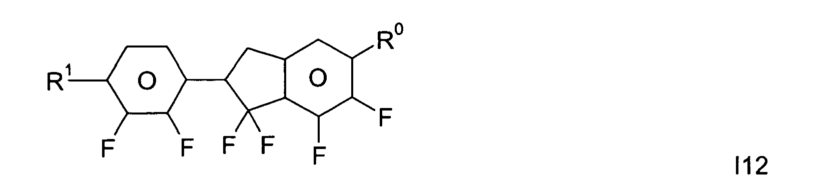 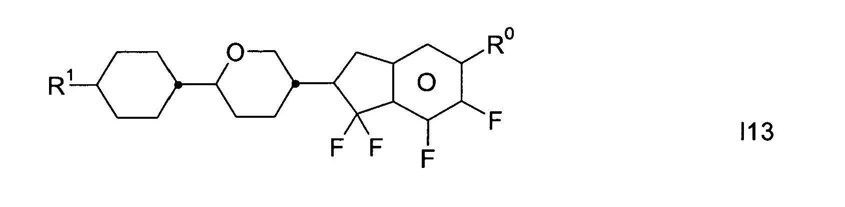 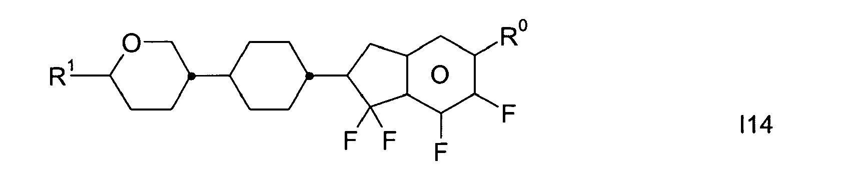 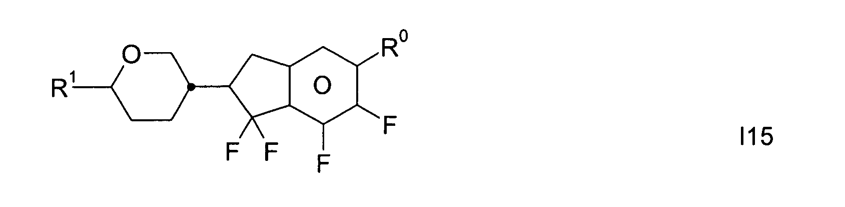 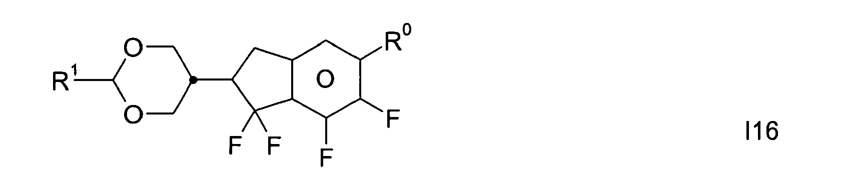 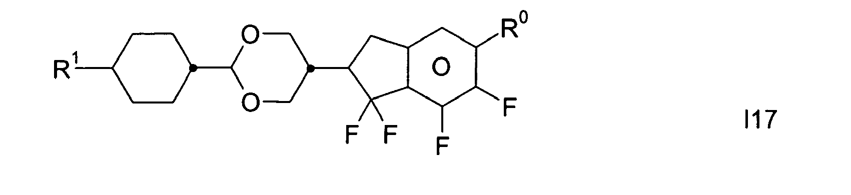 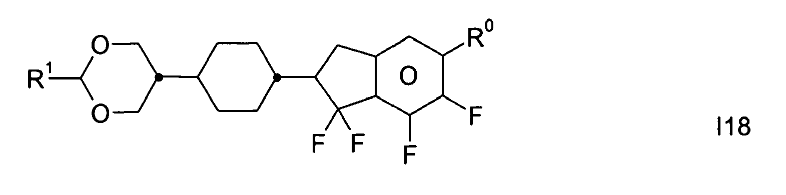 worin
R⁰ und R¹ die in Anspruch 1 angegebenen Bedeutungen haben, enthält.

3. Flüssigkristallines Medium nach Anspruch 1 oder 2, **dadurch gekennzeichnet, dass** es mindestens eine Verbindung ausgewählt aus den Formeln I*-1 bis I*-11 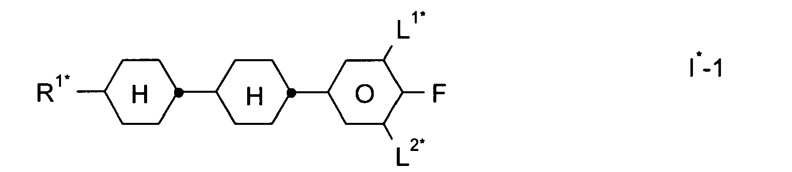 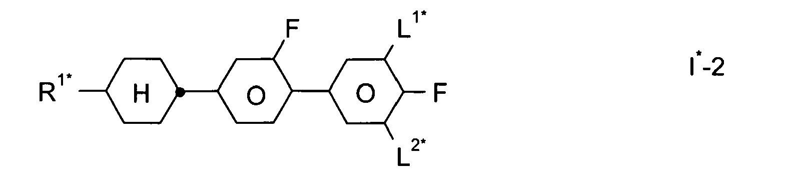 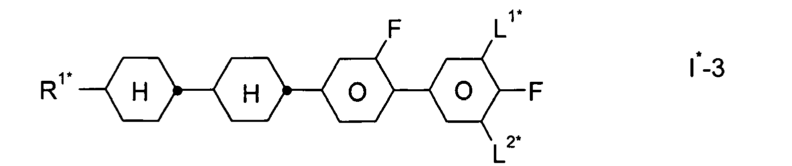 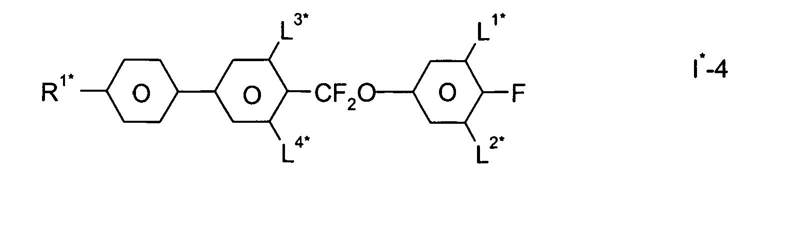 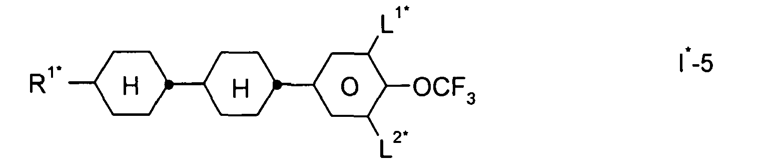 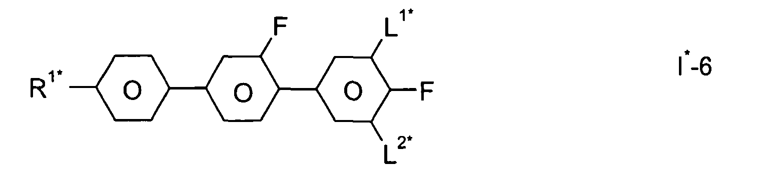 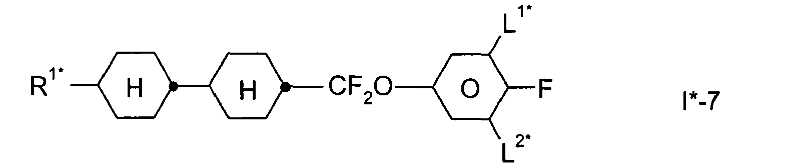 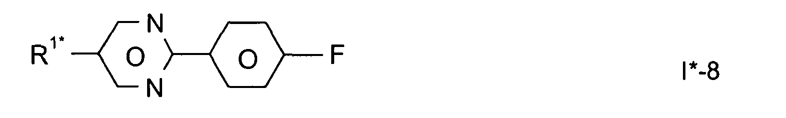 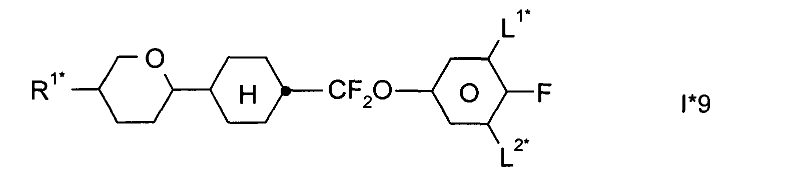 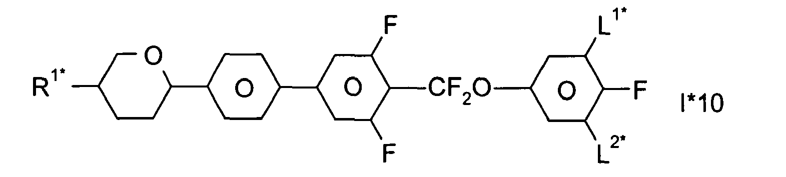 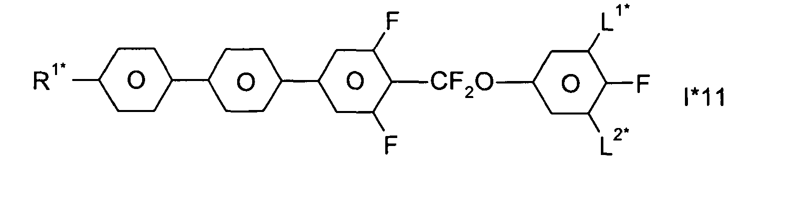 worin
R^{1*}, L^{1*} und L^{2*} die in Anspruch 1 angegebenen Bedeutungen haben und L^{3*} und L^{4*} jeweils unabhängig voneinander H oder F bedeuten,
enthält..

4. Flüssigkristallines Medium nach einem der Ansprüche 1 bis 3, **dadurch gekennzeichnet, dass** L^{1*} F und L^{2*} H oder F ist.

5. Flüssigkristallines Medium nach einem der Ansprüche 1 bis 4, **dadurch gekennzeichnet, dass** L^{1*} = L^{2*} = F.

6. Flüssigkristallines Medium nach einem der Ansprüche 1 bis 5, **dadurch gekennzeichnet, dass** R⁰ H bedeutet.

7. Flüssigkristallines Medium nach einem der Ansprüche 1 bis 6, **dadurch gekennzeichnet, dass** es mindestens eine Verbindung der Formel I1 enthält.

8. Flüssigkristallines Medium nach einem der Ansprüche 1 bis 7, **dadurch gekennzeichnet, dass** es mindestens eine Verbindung der Formel IIB 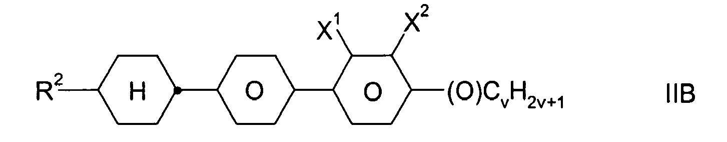 worin
R² und v die in Anspruch 1 angegebenen Bedeutungen haben und X¹ und X² beide F bedeuten,
enthält

9. Flüssigkristallines Medium nach einem der Ansprüche 1 bis 8, **dadurch gekennzeichnet, dass** es zusätzlich eine oder mehrere Verbindungen der Formel I*-1 a 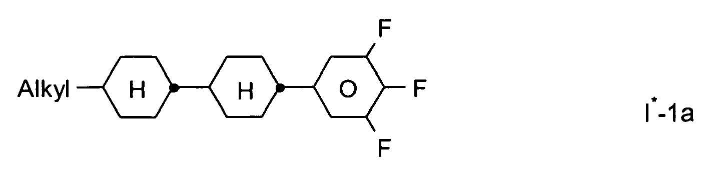 worin Alkyl einen geradkettigen Alkylrest mit 1-6 Kohlenstoffatomen bedeutet,
enthält

10. Flüssigkristallines Medium nach einem der Ansprüche 1 bis 9, **dadurch gekennzeichnet, dass** es zusätzlich eine oder mehrere Verbindungen der Formel III 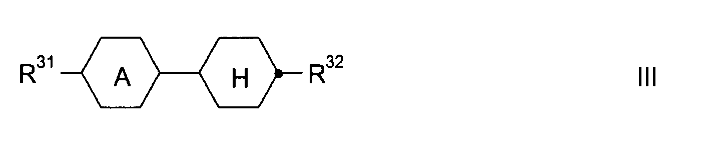 worin
R³¹ und R³² jeweils unabhängig voneinander einen geradkettigen Alkyl, Alkenyl, Alkylalkoxy oder Alkoxyrest mit bis zu 12 C-Atomen, und 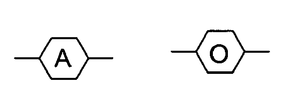 oder 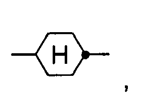
bedeuten,
enthält

11. Flüssigkristallines Medium nach einem der Ansprüche 1 bis 10, **dadurch gekennzeichnet, dass** es eine, zwei, drei, vier oder mehr Verbindungen der Formeln I, IIA und/oder IIB enthält.

12. Flüssigkristallines Medium nach einem der Ansprüche 1 bis 11, **dadurch gekennzeichnet, dass** der Anteil an Verbindungen der Formel I im Gesamtgemisch mindestens 5 Gew.-% beträgt.

13. Flüssigkristallines Medium nach einem der Ansprüche 1 bis 12, **dadurch gekennzeichnet, dass** der Anteil an Verbindungen der Formel I* im Gesamtgemisch ≤ 10 % beträgt.

14. Flüssigkristallines Medium nach einem der Ansprüche 1 bis 13, **dadurch gekennzeichnet, dass** der Anteil an Verbindungen der Formeln IIA und/oder IIB im Gesamtgemisch mindestens 20 Gew.-% beträgt.

15. Flüssigkristallines Medium nach einem der Ansprüche 1 bis 14, **dadurch gekennzeichnet, dass** der Anteil an Verbindungen der Formel III im Gesamtgemisch mindestens 5 Gew.-% beträgt.

16. Flüssigkristallines Medium, das
| | |
|---|---|
| 5-30 Gew.-% | einer oder mehreren Verbindungen der Formel I und einer oder mehreren Verbindungen der Formel I* |
| oder | |
| 20-70 Gew.-% | einer oder mehreren Verbindungen ausgewählt aus den Formeln IIA und/oder IIB und einer oder mehreren Verbindungen der Formel I* |
| oder | |
| 10-100 Gew.-% | einer oder mehreren Verbindungen der Formel I, einer oder mehreren Verbindungen ausgewählt aus den Formeln IIA und/oder IIB und einer oder mehreren Verbindungen der Formel I* |
bezogen auf das Gesamtgemisch,
enthält.

17. Elektrooptische Anzeige mit einer Aktivmatrix-Adressierung basierend auf dem ECB-, VA-, PS-VA-, PALC-, IPS- oder FFS-Effekt, **dadurch gekennzeichnet, dass** sie als Dielektrikum ein flüssigkristallines Medium nach einem der Ansprüche 1 bis 16 enthält.

## Revendications

1. Milieu cristallin liquide basé sur un mélange de composés polaires ayant une anisotropie diélectrique (Δε) négative, **caractérisé en ce qu'**il contient au moins un composé choisi parmi le groupe de composés de la formule I, IIA et IIB 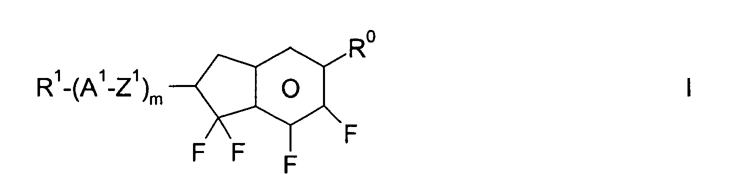 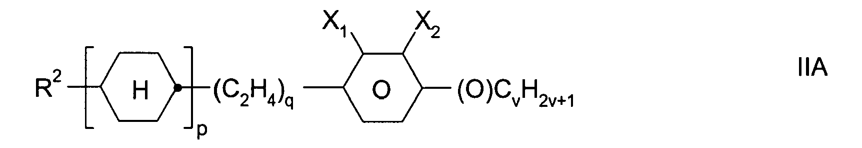 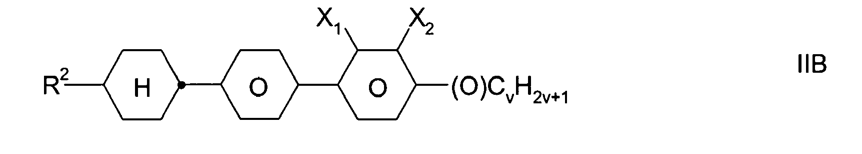 et au moins un composé de la formule I* 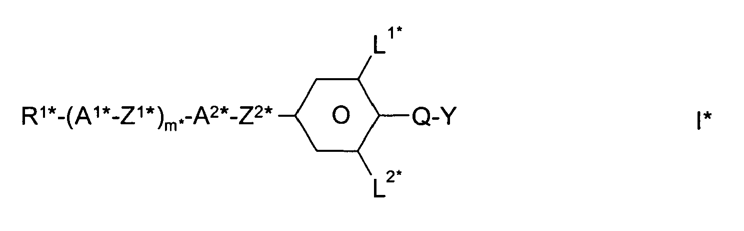 dans lesquelles
R⁰, R¹, R² et R^{1*} chacun, indépendamment l'un de l'autre, représen- tent H, un radical alkyle ou alkényle ayant jusqu'à 15 atomes de C qui est non substitué, monosubstitué par CN ou CF₃ ou au moins monosubstitué par halo- gène, dans lequel, en addition, un ou plusieurs groupes CH₂ dans ces radicaux peuvent être rempla- cés par -O-, -S-, 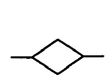 , -C≡C-, -CF₂O-, -OCF₂- -OC-O- ou -O-CO- de telle sorte que des atomes de O ne soient pas liés directement l'un à l'autre,
A¹, A^{1*}, A^{2*} chacun, indépendamment l'un de l'autre
a) représentent un radical 1,4-cyclohexénylène ou 1,4- cyclohexylène, dans lequel un ou deux groupes CH₂ non adjacents peuvent être remplacés par -O- ou -S-,
b) représentent un radical 1,4-phénylène, dans lequel un ou deux groupes CH peuvent être remplacés par N,
c) représentent un radical pris parmi le groupe constitué de pipéridine-1,4-diyle-, 1,4-bicyclo[2.2.2]octylène-, naphta- lène-2,6-diyle, décahydronaphtalène-2,6-diyle, 1,2,3,4- tétrahydronaphtalène-2,6-diyle, phénanthrène-2,7-diyle et fluorène-2,7-diyle,
dans lequel les radicaux a), b) et c) peuvent être mono- ou poly- substitués par des atomes d'halogènes,
Z¹, Z^{1*} et Z^{2*} chacun indépendamment l'un de l'autre représen- tent -CO-O-, -O-CO-, -CF₂O-, -OCF₂-, -CH₂O- -OCH₂-, -CH₂CH₂-, -(CH₂)₄-, -C₂F₄-, -CH₂CF₂-, -CF₂CH₂-, -CF=CF-, -CH=CF-, -CF=CH-, -CH=CH-, -C≡C- ou une liaison simple, et
m et m chacun indépendamment l'un de l'autre représen- tent 0, 1 ou 2
p représente 1 ou 2
q représente 0 ou 1
v représente 1 à 6
L^{1*} et L^{2*} chacun indépendamment l'un de l'autre représen- tent H ou F
X¹ et X² chacun indépendamment l'un de l'autre représen- tent, F, Cl, CHF₂, CF₃, OCHF₂ ou OCF₃
Q liaison simple, -CF₂-, -CHF-, -OCF₂- ou -OCHF- et
Y F ou Cl.

2. Milieu cristallin liquide selon la revendication 1, **caractérisé en ce qu'**il contient au moins un composé choisi parmi les formules I1 à I18 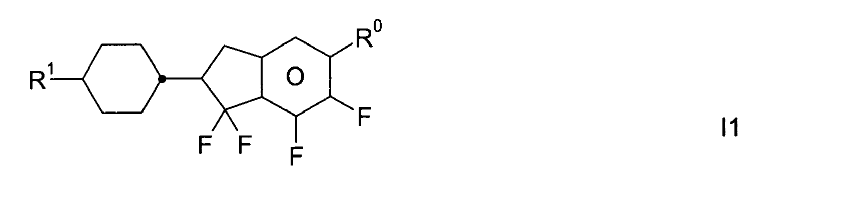 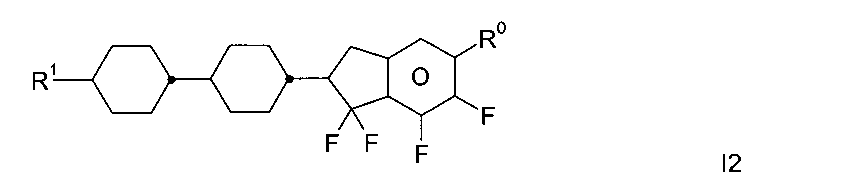 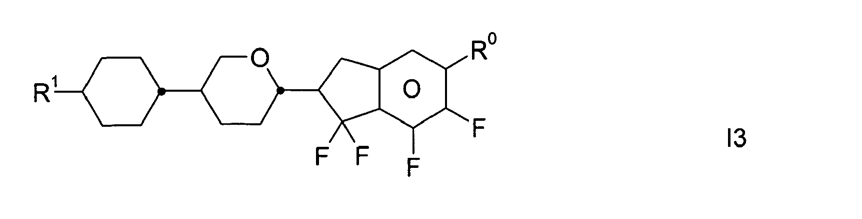 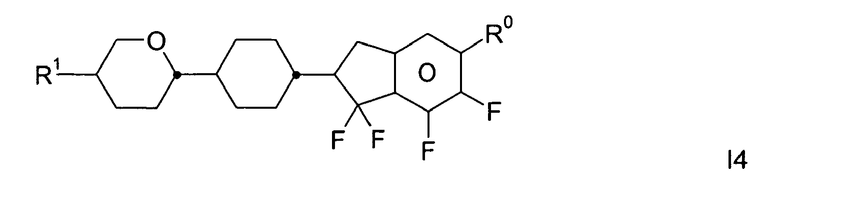 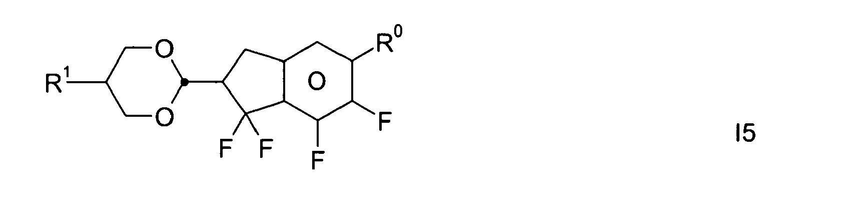 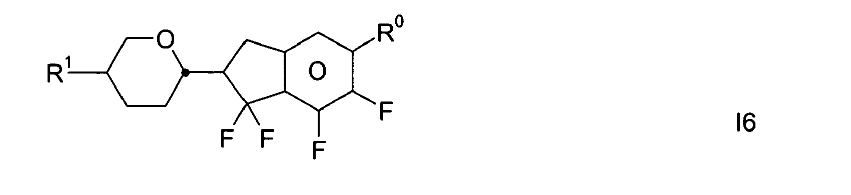 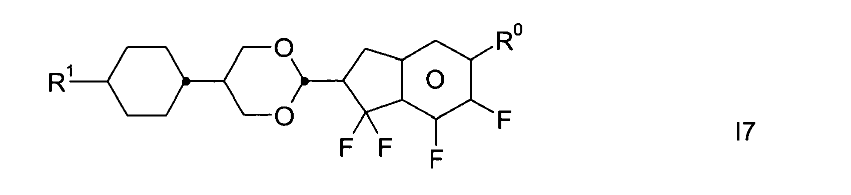 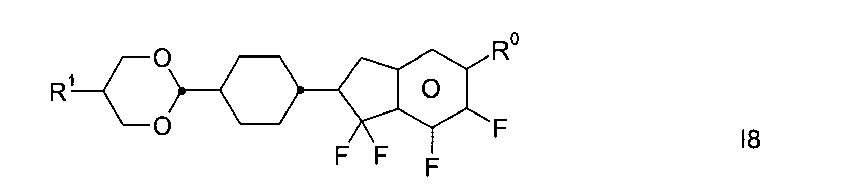 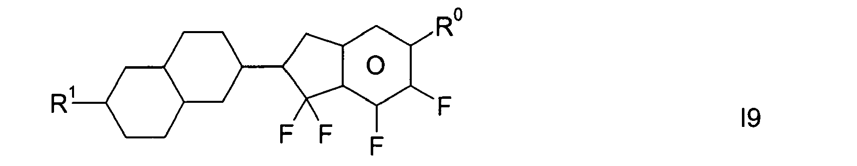 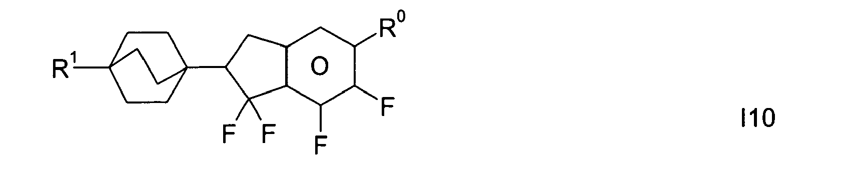 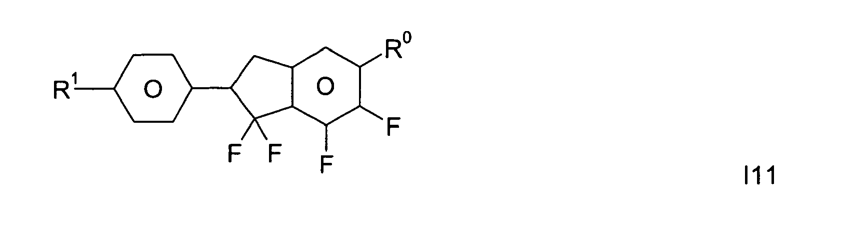 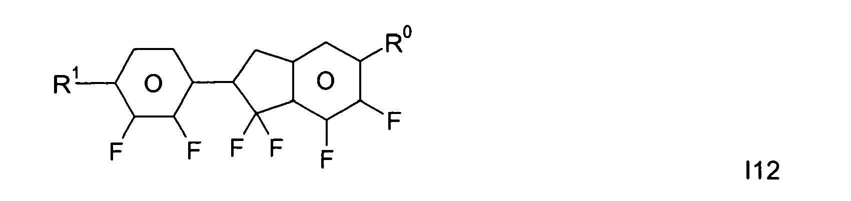 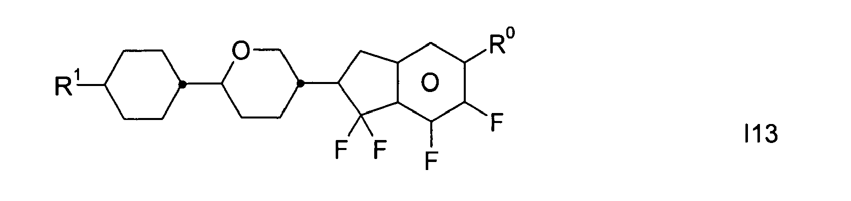 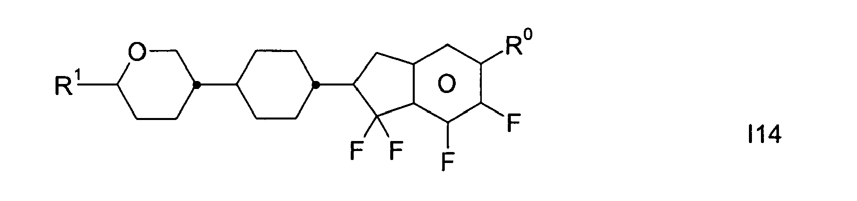 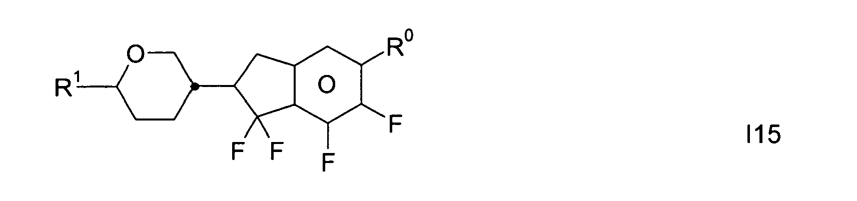 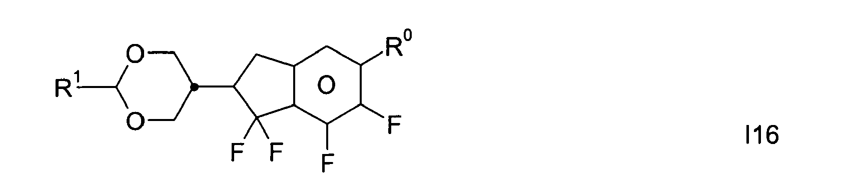 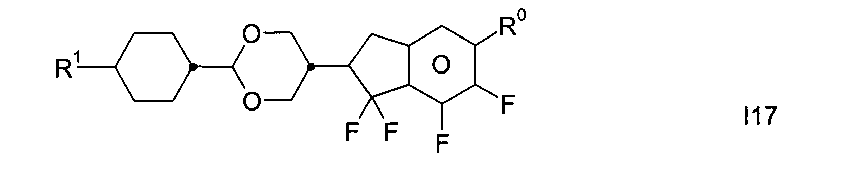 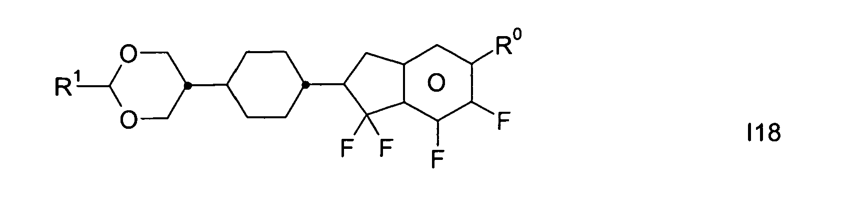 dans lesquelles
R⁰ et R¹ ont les significations indiquées dans la revendication 1.

3. Milieu cristallin liquide selon la revendication 1 ou 2, **caractérisé en ce qu'**il contient au moins un composé choisi parmi les formules I*-1 à I^{*}-11 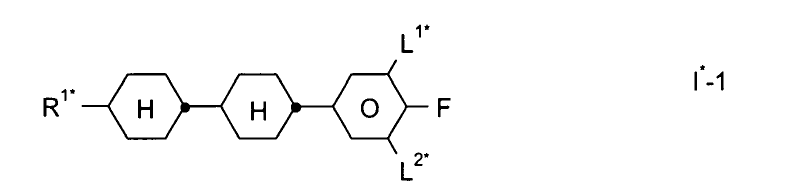 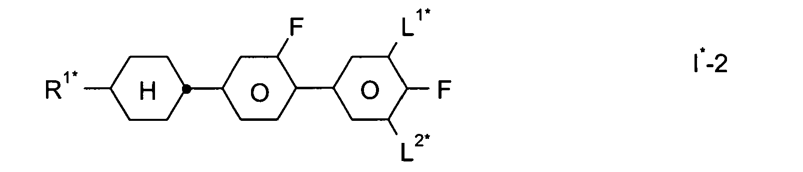 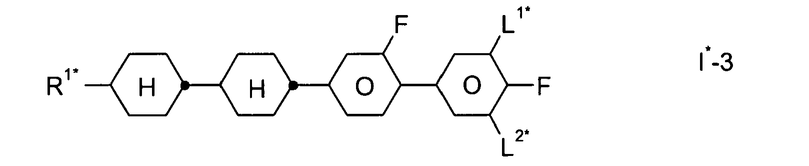 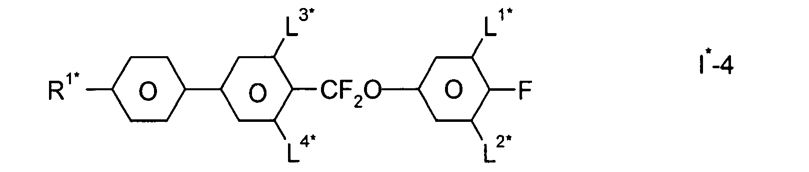 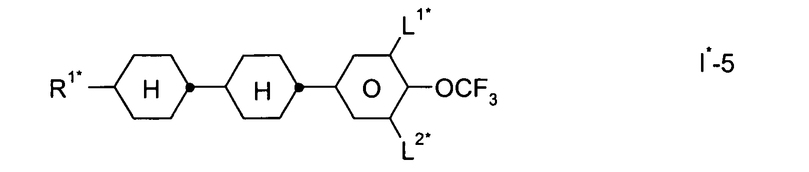 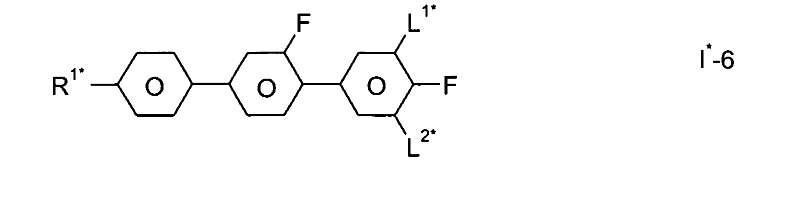 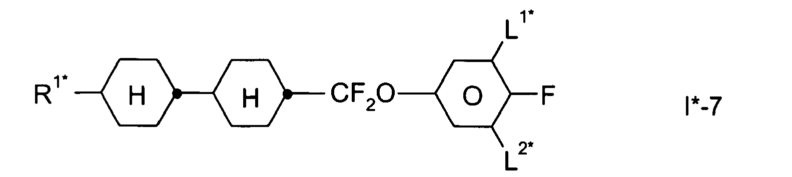 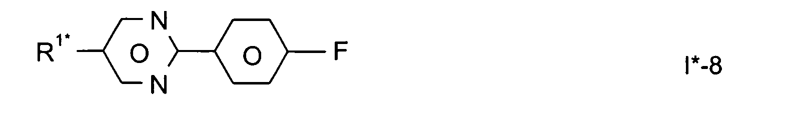 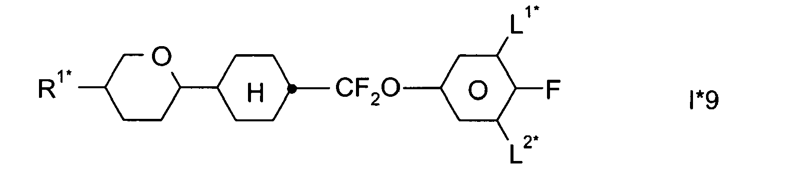 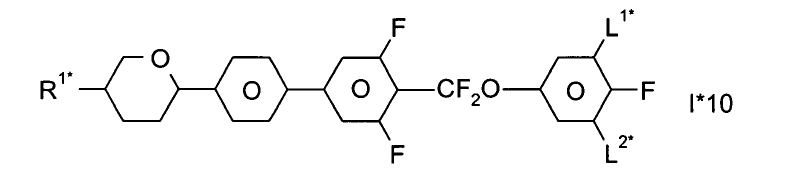 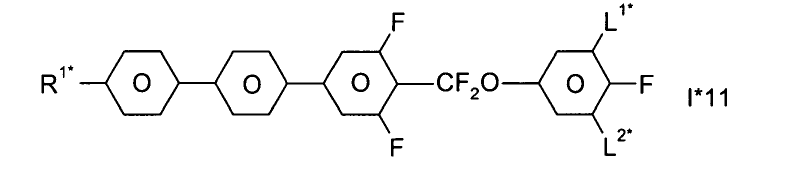 dans lesquelles
R^{1*}, L^{1*} et L² ont les significations indiquées dans la revendication 1 et L^{3*} et L^{4*} chacun indépendamment représentent H ou F.

4. Milieu cristallin liquide selon l'une quelconque des revendications 1 à 3, **caractérisé en ce que** L^{1*} est F et L^{2*} est H ou F.

5. Milieu cristallin liquide selon l'une quelconque des revendications 1 à 4, **caractérisé en ce que** L^{1*} = L^{2*} = F.

6. Milieu cristallin liquide selon l'une quelconque des revendications 1 ou 5, **caractérisé en ce que** R⁰ représente H.

7. Milieu cristallin liquide selon l'une quelconque des revendications 1 à 6, **caractérisé en ce qu'**il contient au moins un composé de la formule I1.

8. Milieu cristallin liquide selon l'une quelconque des revendications 1 à 7, **caractérisé en ce qu'**il contient au moins un composé de la formule IIB 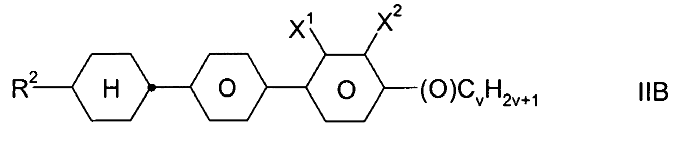 dans laquelle
R² et v ont les significations données dans la revendication 1 et X¹ et X² représentent tous deux F.

9. Milieu cristallin liquide selon l'une quelconque des revendications 1 à 8, **caractérisé en ce qu'**il contient additionnellement un ou plusieurs composés de la formule I*-1a 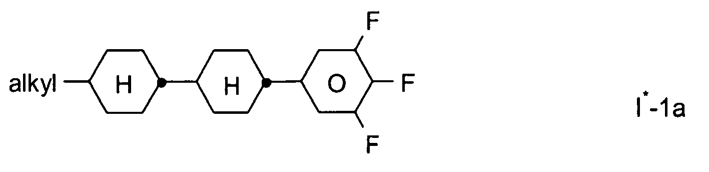 dans laquelle alkyl représente un radical alkyle en chaîne droite ayant 1-6 atomes de carbone.

10. Milieu cristallin liquide selon l'une quelconque des revendications 1 à 9, **caractérisé en ce qu'**il contient additionnellement un ou plusieurs composés de la formule III 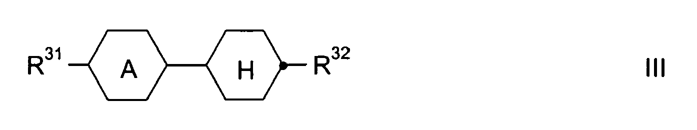 dans laquelle
R³¹ et R³² chacun, indépendamment l'un de l'autre, représentent un radical alkyle, alkényle, alkylalcoxy ou alcoxy en chaîne droite ayant jusqu'à 12 atomes de C, et 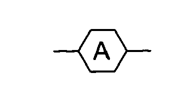 représente 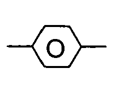 ou

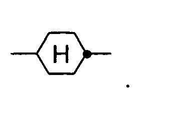

11. Milieu cristallin liquide selon l'une quelconque des revendications 1 à 10, **caractérisé en ce qu'**il contient un, deux, trois, quatre composés ou plus des formules I, IIA et/ou IIB.

12. Milieu cristallin liquide selon l'une quelconque des revendications 1 à 11, **caractérisé en ce que** la proportion de composés de la formule I dans le mélange dans sa totalité est d'au moins 5 % en poids.

13. Milieu cristallin liquide selon l'une quelconque des revendications 1 à 12, **caractérisé en ce que** la proportion de composés de la formule I* dans le mélange dans sa totalité est ≤ 10 % en poids.

14. Milieu cristallin liquide selon l'une quelconque des revendications 1 à 13, **caractérisé en ce que** la proportion de composés des formules IIA et/ou IIB dans le mélange dans sa totalité est d'au moins 20 % en poids.

15. Milieu cristallin liquide selon l'une quelconque des revendications 1 à 14, **caractérisé en ce que** la proportion de composés de la formule III dans le mélange dans sa totalité est d'au moins 5 % en poids.

16. Milieu cristallin liquide qui contient
| | |
|---|---|
| 5-30 % en poids | d'un ou plusieurs composés de la formule I est d'un ou plusieurs composés de la formule I* |
| ou | |
| 20-70 % en poids | d'un ou plusieurs composés de la formule IIA et/ou IIB et d'un ou plusieurs composés de la formule I* |
| ou | |
| 10-100 % en poids | d'un ou plusieurs composés de la formule I, d'un ou plusieurs composés choisis parmi la formule IIA et/ou IIB et d'un ou plusieurs composés de la formule I* |
sur la base du mélange total.

17. Affichage électro-optique avec adressage par matrice active basé sur l'effet ECB, VA, PS-VA, PALC, IPS ou FFS, **caractérisé en ce qu'**il contient, comme diélectrique, un milieu cristallin liquide selon l'une des revendications 1 à 16.
